# EUROPEAN PATENT SPECIFICATION

(11) **EP 3 001 709 B1**
(45) Date of publication and mention of the grant of the patent: **28.10.2020**
(21) Application number: 14801128.1
(22) Date of filing: 15.05.2014
(51) Int. Cl.: H04W 8/00, H04W 52/28, H04W 76/14, H04W 92/18

(54) **COMMUNICATION TERMINAL AND SERVER APPARATUS**
KOMMUNIKATIONSENDGERÄT UND SERVERVORRICHTUNG
TERMINAL DE COMMUNICATION ET APPAREIL SERVEUR

(30) Priority: 21.05.2013 JP 2013106860
(43) Date of publication of application: 30.03.2016
(73) Proprietor: Sharp Kabushiki Kaisha, Osaka-shi, Osaka 545-8522 (JP)
(72) Inventor: ENOMOTO Masayuki, Osaka-shi Osaka 545-8522 (JP); ARAMOTO Masafumi, Osaka-shi Osaka 545-8522 (JP)
(74) Representative: Müller-Boré & Partner Patentanwälte PartG mbB
(86) International application number: PCT/JP2014/062973
(87) International publication number: WO 2014/188957

(56) References cited:
- EP-A1- 2 999 246
- "3rd Generation Partnership Project; Technical Specification Group Services and System Aspects; Study on architecture enhancements to support Proximity Services (ProSe) (Release 12)", 3GPP STANDARD; 3GPP TR 23.703, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.2.0, 15 May 2013 (2013-05-15), pages 1-26, XP050692517, [retrieved on 2013-05-15]
- "3rd Generation Partnership Project; Technical Specification Group Services and System Aspects; Proximity based Services; Stage 2 (Release 12)", 3GPP STANDARD; 3GPP TS 23.303, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.2.1, 26 February 2014 (2014-02-26), pages 1-52, XP050769525, [retrieved on 2014-02-26]
- 'Solution for ProSe UE Discovery' 3GPP TSG-SA WG2#96, S2-131194 12 April 2013, XP050708401
- HUAWEI, HISILICON: 'Physical layer options for D2D discovery' 3GPP TSG-RAN WG1 MEETING #73, RL-131864 11 May 2013, XP050697651
- "3rd Generation Partnership Project; Technical Specification Group Services and System Aspects; Service requirements for the Evolved Packet System (EPS) (Release 12)", 3GPP STANDARD; 3GPP TS 22.278, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V12.2.0, 15 March 2013 (2013-03-15), pages 1-42, XP050692129, [retrieved on 2013-03-15]

## Description

### Technical Field

The present invention relates to a mobile communication system including a communication terminal, a neighboring terminal located in a neighborhood of the communication terminal, a server apparatus which authenticates a range of communication, and a base station apparatus.

### Background Art

The 3rd Generation Partnership Project (3GPP), which is the standardization organization for mobile communication systems, is working on development of specifications for the Evolved Packet System (EPS) disclosed in NPL 1 listed below as a next-generation mobile communication system. As an access system connected to the EPS, not only Long Term Evolution (LTE) but also a wireless LAN (WLAN) is being examined.

Additionally, as disclosed in NPL 2, 3GPP is examining neighborhood services (proximity-based service (ProSe)), such as detecting that UE user equipment (UE) is in a neighborhood, and establishing a direct communication path between neighboring UEs for communication. A direct communication path between UEs in ProSe here is a communication path which allows direct data transmission/reception between neighboring UEs without intervention of a base station and a core network, unlike a conventional UE communication path which is established via a base station, to which a UE connects, and via a core network, to which the base station connects.

Since ProSe allows communication without intervention of an access network including an LTE base station and a WLAN base station or a core network, to which the access network is connected, ProSe can also be expected to have a load-reducing effect of avoiding heavy traffic (avoiding congestion) in the access network or the core network.

In ProSe, use of two methods is being considered for a direct communication path between UEs. One is to establish a direct communication path between UEs using LTE access technology (hereinafter referred to as LTE Direct). The other is to establish a direct communication path using wireless LAN access technology.

In LTE Direct, UEs use assigned commercial frequencies in LTE systems of mobile telecommunications carriers and perform direct data transmission/reception between the UEs using an LTE communication method.

In WLAN Direct, UEs perform direct data transmission/reception between the UEs using assigned uncommercial frequencies in WLANs.

Since UEs perform data transmission/reception by LTE Direct or WLAN Direct, ProSe has the need to search for a communication target UE and sense presence of a communication target UE in a neighborhood as a service requirement.

It is also stipulated that approval by a mobile telecommunications carrier is necessary at the time of a search for a communication target UE to make direct UE-to-UE communication a service to be provided by the mobile telecommunications carrier.

As described above, ProSe is intended to stipulate a communication service which provides detection of a neighboring UE and establishment of a direct communication path between neighboring UEs for communication.

A UE needs to detect that a communication target UE is in a neighborhood in using ProSe, and the level of a range to be searched needs to be determined. A range class is defined as a criterion for determining the level of a range to be searched, and the need for approval by a mobile telecommunications carrier is stipulated. As described above, ProSe needs a range class to sense presence of a neighboring UE with respect to a certain UE.

### Citation List

### Non Patent Literature

NPL 1: 3GPP TS23.401 Technical Specification Group Services and System Aspects, General Packet Radio Service (GPRS) enhancements for Evolved Universal Terrestrial Radio Access Network (E-UTRAN) access
NPL 2: 3GPP TR22.803 Technical Specification Group Services and System Aspects, Feasibility study for Proximity Services (ProSe)

The document "3rd Generation Partnership Project; Technical Specification Group Services and System Aspects; Study on architecture enhancements to support Proximity Services (ProSe) (Release 12)", 3GPP STANDARD; 3GPP TR 23.703, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20130515), vol. SA WG2, no. V0.2.0, discusses architectural enhancements needed to support Proximity Services, ProSe. Regarding configuration for ProSe direct services, it is described that the UE gets the authorization for direct services from the DPFs of the local PLMNs by performing the steps: HPLMN configuring UE with PLMN list that support direct discovery; UE constructing the DPF FQDNs and contacting the local DPFs to receive authorization info; local DPF obtaining authorization info from HPLMN and merging with own policy; and local DPF providing authorization info to UE that applies to this PLMN. The document also discusses ProSe Discovery as a process that identifies another UE in proximity using E-UTRAN.

EP 2 999 246 A1 describes a method and a device for performing a proximity service, ProSe, in a wireless communication system are disclosed. A method by which a user equipment UE performs a ProSe in a wireless communication system, according to one embodiment of the present invention, can comprise the steps of: determining whether a ProSe operation is enabled at a current location of the UE, on the basis of ProSe feature support related information; performing an evaluation related to the performance of the ProSe operation by using information on proximity criteria if the ProSe operation is enabled; and performing the ProSe operation if the evaluation result satisfies the proximity criteria.

### Summary of Invention

### Technical Problem

For neighboring UE detection, a method which performs neighboring terminal detection within a network and notifies a UE and a method which performs direct detection between terminals (Direct Discovery) are being considered.

Direct Discovery needs signal transmission intended for a terminal to detect a neighboring terminal and signal transmission intended to be found by a neighboring terminal.

Resources used for such signals are limited and need to be managed so as to prevent interference. A frequency, a piece of temporal information, such as transmission/reception timing, and the like are conceived here as examples of the resources. In addition, a range of execution of Direct Discovery (a discovery range) needs to be determined.

However, how to determine a discovery range, how a UE detects the determined discovery range, and how to use the discovery range are still not clear.

More specifically, a method in which a mobile telecommunications carrier defines several separate range classes for a range of neighboring terminal detection and determines a range class, a method by which a UE detects a range class and the like, a method for using a range class, and the like are not yet clear. Due to lack of specific means for solving the above-described problem, a UE as a communication source cannot find a UE as a communication target at the time of a search for a communication target UE, and a ProSe service cannot be used.

More specifically, how a mobile telecommunications carrier authenticates a range class is not yet clear. How to reflect a congestion status between a UE and an eNB and a congestion status in a core network is also not yet clear.

Which apparatus is to determine a range class and notify a UE of the range class is also not yet clear. Since a range class is not clear to a UE, the UE cannot make a discovery of a communication target UE.

Since a mobile telecommunications carrier has no means for authenticating a range class for UE discovery, a communication target UE cannot be found for a user of a mobile telecommunications carrier, and a neighborhood communication service cannot be provided.

Even if a mobile telecommunications carrier can authenticate a range class, the range class is not clear to a UE. A communication target UE cannot be used for discovery, and a neighborhood communication service cannot be provided.

One aspect of the present invention has been made in view of the above-described business and provides a mobile communication system or the like which is designed such that a mobile telecommunications carrier controls a range class that is a range of discovery among neighboring terminals in ProSe and such that a UE executes Direct Discovery on a basis of the range class.

### Solution to Problem

In order to solve the above-described problem, there is provided a User Equipment, UE, a server apparatus, a communication method for a UE and a communication method for a server apparatus as defined in the appended independent

### Brief Description of Drawings

[Fig. 1] Fig. 1 is a diagram for explaining the overview of a mobile communication system 1 according to a first embodiment.
[Fig. 2A] Fig. 2A is a first diagram for explaining the configuration of an IP mobile communication network.
[Fig. 2B] Fig. 2B is a second diagram for explaining the configuration of the IP mobile communication network.
[Fig. 3] Fig. 3 is a diagram for explaining the functional configuration of a UE according to the first embodiment.
[Fig. 4A] Fig. 4A is a first chart to show an example of the functional configuration to be managed in a storage unit of the UE.
[Fig. 4B] Fig. 4B is a second chart to show the example of the functional configuration to be managed in the storage unit of the UE.
[Fig. 4C] Fig. 4C is a third chart to show the example of the functional configuration to be managed in the storage unit of the UE.
[Fig. 4D] Fig. 4D is a fourth chart to show the example of the functional configuration to be managed in the storage unit of the UE.
[Fig. 5A] Fig. 5A is a first diagram to show an example of range class usage.
[Fig. 5B] Fig. 5B is a second diagram to show an example of range class usage.
[Fig. 6] Fig. 6 is a diagram for explaining the functional configuration of a local authentication server.
[Fig. 7A] Fig. 7A is a first chart to show an example of the functional configuration to be managed in a storage unit of the local authentication server.
[Fig. 7B] Fig. 7B is a second chart to show the example of the functional configuration to be managed in the storage unit of the local authentication server.
[Fig. 7C] Fig. 7C is a third chart to show the example of the functional configuration to be managed in the storage unit of the local authentication server.
[Fig. 7D] Fig. 7D is a fourth chart to show the example of the functional configuration to be managed in the storage unit of the local authentication server.
[Fig. 7E] Fig. 7E is a fifth chart to show the example of the functional configuration to be managed in the storage unit of the local authentication server.
[Fig. 8] Fig. 8 is a diagram for explaining the functional configuration of a home authentication server.
[Fig. 9A] Fig. 9A is a first chart to show an example of the functional configuration to be managed in a storage unit of the home authentication server.
[Fig. 9B] Fig. 9B is a second chart to show the example of the functional configuration to be managed in the storage unit of the home authentication server.
[Fig. 10] Fig. 10 is a chart for explaining procedures for discovery authentication and range class notification.
[Fig. 11] Fig. 11 is a chart for explaining a method for authenticating a range class according to the first embodiment.
[Fig. 12] Fig. 12 is a chart for explaining a method for authenticating a range class according to the first embodiment.
[Fig. 13] Fig. 13 is a chart for explaining a method for authenticating a range class according to the first embodiment.
[Fig. 14] Fig. 14 is a diagram for explaining the overview of a mobile communication system 1 according to a second embodiment.
[Fig. 15] Fig. 15 is a chart to show an example of a functional configuration to be managed in a storage unit of a UE according to the second embodiment.

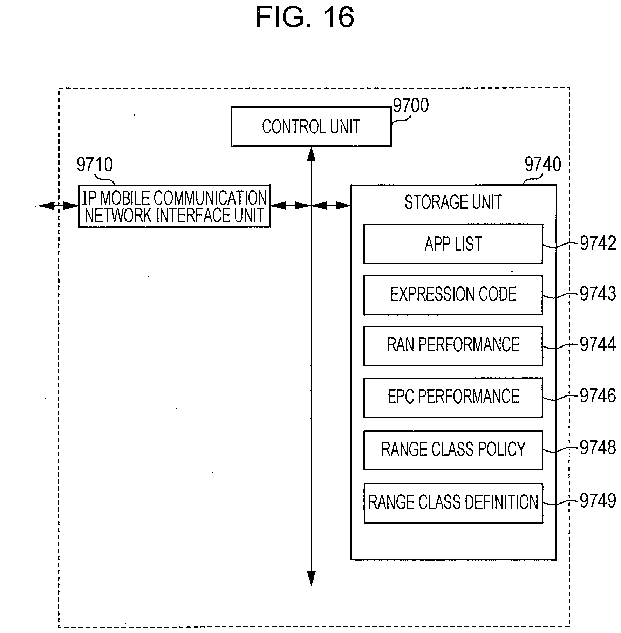

[Fig. 16] Fig. 16 is a diagram to show an example of a functional configuration for explaining the configuration of an authentication server.
[Fig. 17] Fig. 17 is a chart to show an example of the functional configuration to be managed in a storage unit of the authentication server.
[Fig. 18] Fig. 18 is a diagram to show an example of a functional configuration for explaining the configuration of an application server.
[Fig. 19] Fig. 19 is a chart to show an example of the functional configuration to be managed in a storage unit of the application server.
[Fig. 20] Fig. 20 is a chart to show a procedure for discovery authentication and range class notification. Description of Embodiments

Best modes for carrying out the present invention will be described below with reference to the drawings. Note that, by way of example, embodiments of a mobile communication system when the present invention is applied will be described in detail with reference to the drawings in the present embodiment.

### [1. First Embodiment]

Note that a range class will be described as a piece of information designating a range of detection of a neighboring terminal for searching for a communication target UE. First, a first embodiment, to which the present invention is applied, will be described with reference to the drawings.

### [1.1 Overview of Mobile Communication System]

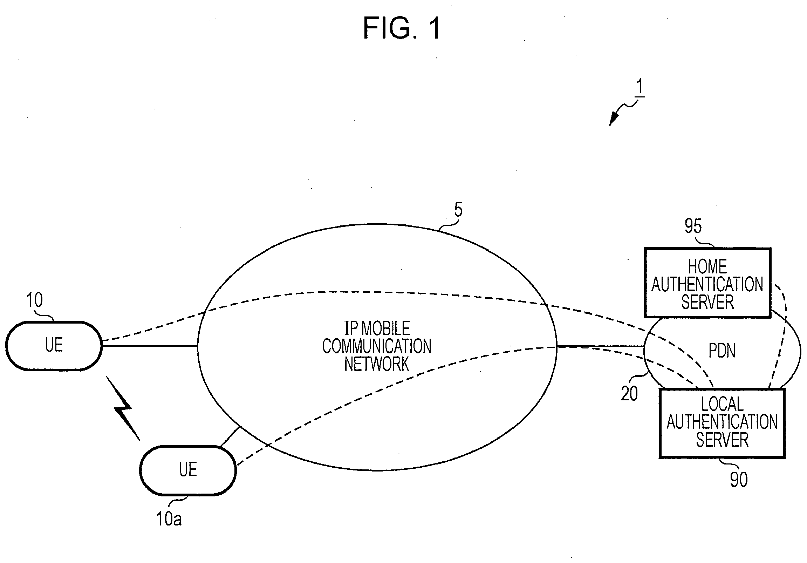

Fig. 1 is a diagram for explaining the overview of a mobile communication system 1 according to the present embodiment. As shown in Fig. 1, the mobile communication system 1 is composed of a UE (mobile station apparatus) 10, a UE (mobile station apparatus) 10a, and a packet data network (PDN) 20, which are connected via an IP mobile communication network 5. In the PDN 20, a local authentication server 90 and a home authentication server 95 are arranged. The local authentication server 90 is an authentication server which is managed by a mobile telecommunications carrier of a network where the UE 10 or the UE 10a performs discovery. The home authentication server 95 is an authentication server which is managed by a mobile telecommunications carrier of a network, to which the UE 10 or the UE 10a subscribes.

The local authentication server 90 may be administered by a mobile telecommunications carrier different from the mobile telecommunications carrier that operates the home authentication server 95. Additionally, the local authentication server 90 and the home authentication server 95 may be operated in a single country. Note that the UE 10 and the UE 10a can ensure secure communication with the local authentication server 90 and perform transmission/reception of a piece of control information and data. The home authentication server 95 can also ensure secure communication with the local authentication server 90 and perform transmission/reception of a piece of control information and data.

Note that the home authentication server 95 and the local authentication server 90 may be configured to be included in the PDN 20 or may be configured to be included in a core network 7.

The UE 10 and the UE 10a may be connected to the same mobile telecommunications carrier network or may be connected to different mobile telecommunications carrier networks in a single country. The IP mobile communication network 5 may be, for example, a network composed of a wireless access network and a core network which are operated by a mobile telecommunications carrier or may be a broadband network which is operated by a fixed-line telecommunications carrier. An IP mobile communication network operated by a mobile telecommunications carrier will be described in detail later.

The broadband network refers to an IP communication network operated by a telecommunications carrier that connects by asymmetric digital subscriber line (ADSL) or the like and that provides high-speed communication through a digital line, such as an optical fiber. The IP mobile communication network 5 is not limited to the above-described networks and may be a network which is wirelessly accessed by Worldwide Interoperability for Microwave Access (WiMAX) or the like.

The UE 10 is a communication terminal which connects using an access system, such as LTE or a WLAN, and can connect to an IP access network by being equipped with a communication interface for 3GPP LTE, a communication interface for a WLAN, or the like and establishing a connection.

Specific examples include a cellular phone unit and a smartphone and also include a tablet computer, a personal computer, a home appliance, and the like which are provided with a communication function.

The PDN 20 is a network which provides a network service which exchanges data in packets and is, for example, the Internet or IMS.

The PDN 20 is connected to an IP access network using a wired line or the like. For example, the PDN 20 is constructed by asymmetric digital subscriber line (ADSL), an optical fiber, or the like. Note that the PDN 20, however, is not limited to this and may be a wireless access network, such as Long Term Evolution (LTE), a wireless LAN (WLAN), or Worldwide Interoperability for Microwave Access (WiMAX).

### [1.1.1 Example of Configuration of IP Mobile Communication Network]

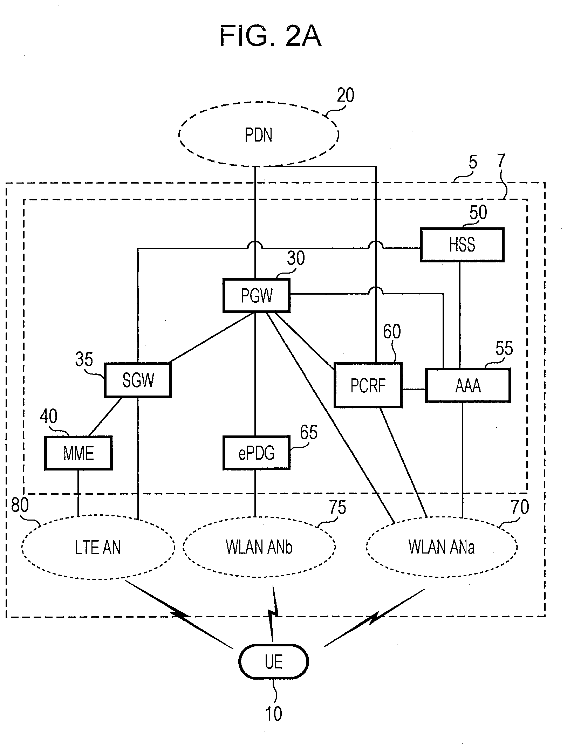

As shown in Fig. 2A, the mobile communication system 1 is composed of the UE 10, the IP mobile communication network 5, and the packet data network (PDN) 20. Note that the UE 10a is a UE different from the UE 10 and has the same configuration as the UE 10 and that a description thereof will be omitted. Although a plurality of UEs other than the UE 10 and the UE 10a can be connected to the IP mobile communication network 5, such UEs are not illustrated for illustrative simplicity. The IP mobile communication network 5 is composed of the core network 7 and wireless access networks. The detailed configuration of the core network 7 is shown in Fig. 2A.

Note that the PDN 20 is a network which provides a network service that exchanges data in packets described with reference to Fig. 1 and is, for example, the Internet or IMS.

The core network 7 is composed of a packet data network gateway (PGW) (access control apparatus) 30, a serving gateway (SGW) 35, a mobile management entity (MME) 40, a home subscriber server (HSS) 50, an authentication, authorization, accounting (AAA) 55, a policy and charging rules function (PCRF) 60, and an enhanced packet data gateway (ePDG) 65.

The wireless access networks may be composed of a plurality of different access networks. Each access network is connected to the core network 7. Additionally, the UE 10 can connect wirelessly to the wireless access networks.

As the wireless access networks, an LTE access network (an LTE AN 80) which is connectable by an LTE access system and access networks which are connectable by a WLAN access system can be configured.

As the access networks connectable by the WLAN access system, a WLAN access network b (a WLAN ANb 75) which connects to the ePDG 65 as a connection apparatus to the core network 7 and a WLAN access network a (a WLAN ANa 70) which connects to the PGW 30, the PCRF 60, and the AAA 55 can be configured.

Note that since each apparatus is configured in the same manner as a conventional apparatus in a mobile communication system using the EPS, a detailed description thereof will be omitted. The function of each apparatus will be briefly described. The PGW 30 is connected to the PDN 20, the SGW 35, the ePDG 65, the WLAN ANa, the PCRF 60, and the AAA 55 and delivers user data as a gateway apparatus between the PDN 20 and the core network 7.

The SGW 35 is connected to the PGW 30, the MME 40, and the LTE AN 80 and delivers user data as a gateway apparatus between the core network 7 and the LTE AN 80.

The MME 40 is connected to the SGW 35 and the LTE AN 80 and is an access control apparatus which controls access from the UE 10 via the LTE AN 80.

The HSS 50 is connected to the SGW 35 and the AAA 55 and manages a piece of subscriber information. The AAA 55 is connected to the PGW 30, the HSS 50, the PCRF 60, and the WLAN ANa 70 and controls access from the UE 10 that connects via the WLAN ANa 70. The PCRF 60 is connected to the PGW 30, the WLAN ANa 70, and the AAA 55 and performs QoS management for data delivery.

The ePDG 65 is connected to the PGW 30 and the WLAN ANb 75 and delivers user data as a gateway apparatus between the core network 7 and the WLAN ANb 75.

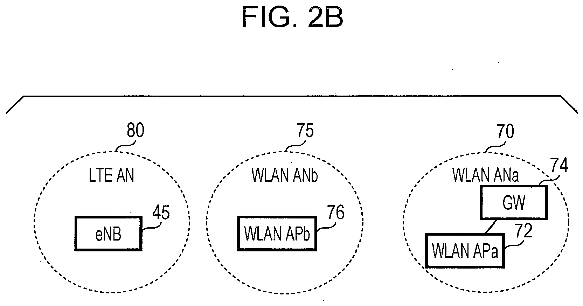

As shown in Fig. 2B, each wireless access network includes an apparatus (for example, a base station apparatus or an access point apparatus) or the like, to which the UE 10 is actually connected. As an apparatus used for the connection, various apparatuses which are adapted to the wireless access networks are conceivable. In the present embodiment, the LTE AN 80 is configured to include an eNB 45. The eNB 45 is a wireless base station, to which the UE 10 connects by the LTE access system, and the LTE AN 80 may be configured to include one or a plurality of wireless base stations.

The WLAN ANa 70 is configured to include a WLAN APa 72 and a gateway (GW) 74. The WLAN AP 72 is a wireless base station, to which the UE 10 connects by the WLAN access system, and the WLAN AN 70 may be configured to include one or a plurality of wireless base stations. The GW 74 is a gateway apparatus between the core network 7 and the WLAN ANa 70. The WLAN APa 72 and the GW 74 may be configured as a single apparatus.

As described above, the gateway included in the WLAN ANa 70 can connect to a plurality of apparatuses in the core network 7. In a case where a provider which operates the core network 7 and a provider which operates the WLAN ANa 70 are different or in other cases, operation with the above-described configuration is possible if a trusting relationship is built between the providers through an operational agreement or convention or the like. In other words, the WLAN APa 72 is a reliable access network for the provider that operates the core network 7.

The WLAN ANb 75 is configured to include a WLAN APb 76. The WLAN AP 76 is a wireless base station, to which the UE 10 connects by the WLAN access system, and the WLAN AN 75 may be configured to include one or a plurality of wireless base stations.

As described above, the WLAN ANb 75 is connected to the core network 7 using, as a gateway, the ePDG 65 that is an apparatus included in the core network 7. The ePDG 65 has a security function for ensuring safety. In a case where the provider that operates the core network 7 and a provider which operates the WLAN ANa 70 are different or in other cases, operation with the above-described configuration is performed if a trusting relationship is not built between the providers through an operational agreement or convention or the like. In other words, the WLAN APa is an unreliable access network for the provider that operates the core network 7, and the ePDG 65 included in the core network 7 provides safety.

Note that connection of the UE 10 to each wireless access network in the present specification refers to connection to a base station apparatus, an access point, or the like included in the wireless access network and that data, signals, and the like are transmitted/received via the base station apparatus or the access point.

For example, connection of the UE 10 to the LTE AN 80 refers to connection of the UE 10 via the eNB 45, and connection to the WLAN ANa 70 refers to connection via the WLAN APa 72 and/or the GW 74. Additionally, connection of the UE 10 to the WLAN ANb 75 refers to connection of the UE 10 to the WLAN APb 76.

### [1.2 Configurations of Apparatuses]

Next, the configuration of each apparatus will be briefly described with reference to the drawings.

### [1.2.1 Configuration of UE]

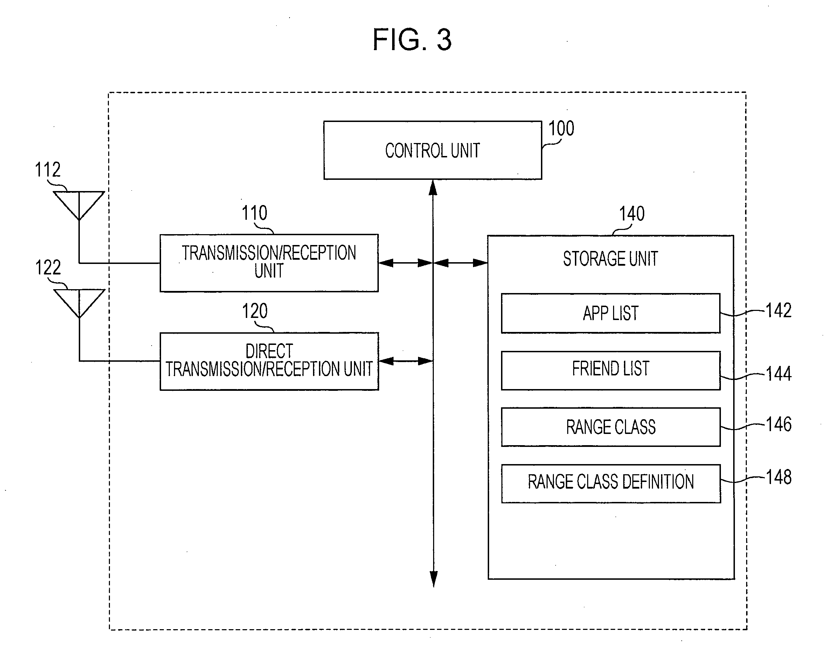

Fig. 3 shows the functional configuration of the UE 10 according to the present embodiment. In the UE 10, a transmission/reception unit 110, a direct transmission/reception unit 120, and a storage unit 140 are connected to a control unit 100 via a bus.

The control unit 100 is a functional unit for controlling the UE 10. The control unit 100 implements various processes by reading out and executing various programs stored in the storage unit 140.

The transmission/reception unit 110 is a functional unit which executes data transmission/reception through wireless communication by an LTE access method. The transmission/reception unit 110 is composed of a transmission unit and a reception unit. The transmission unit can transmit data and a piece of control information via an LTE base station, and the reception unit can transmit data and a piece of control information via the LTE base station. Note that an external antenna 112 is connected to the transmission/reception unit 110. The transmission unit can transmit data and a piece of control information via the LTE base station while the direct reception unit can receive data and a piece of control information via the LTE base station.

The UE 10 can also connect to the LTE base station via the transmission/reception unit and connect to the IP access network 5 to perform communication.

The transmission/reception unit 110 may be configured as separate units, a transmission unit which transmits user data as application communication data and a piece of control information and a reception unit which receives user data as application communication data and a piece of control information.

The direct transmission/reception unit 120 is a functional unit capable of direct communication with a different UE using data, a piece of control information, and the like without intervention of an LTE base station. The direct transmission/reception unit 120 is composed of a direct transmission unit and a direct reception unit. The direct transmission unit can transmit data and a piece of control information without intervention of an LTE base station while the direct reception unit can transmit data and a piece of control information without intervention of an LTE base station. Note that an external antenna 112 is connected to the direct transmission/reception unit 110 and that the direct transmission unit can transmit data and a piece of control information without intervention of an LTE base station while the direct reception unit can receive data and a piece of control information without intervention of an LTE base station.

The direct transmission/reception unit 120 may be configured as separate units, a transmission unit which transmits user data as application communication data and a piece of control information and a reception unit which receives user data as application communication data and a piece of control information.

The transmission/reception unit 110 and the direct transmission/reception unit 120 may be configured as one transmission/reception unit. Alternatively, the transmission unit of the transmission/reception unit 110 and the transmission unit of the direct transmission/reception unit 120 may be configured as one transmission unit, and the reception unit of the transmission/reception unit 110 and the reception unit of the direct transmission/reception unit 120 may be configured as one reception unit.

The storage unit 140 is a functional unit which stores programs, data, and the like necessary for various operations of the UE 10. The storage unit 140 is composed of, for example, a semiconductor memory or a hard disk drive (HDD). Additionally, the storage unit 140 stores an APP list 142, a friend list 144, a range class 146, and a range class definition 148.

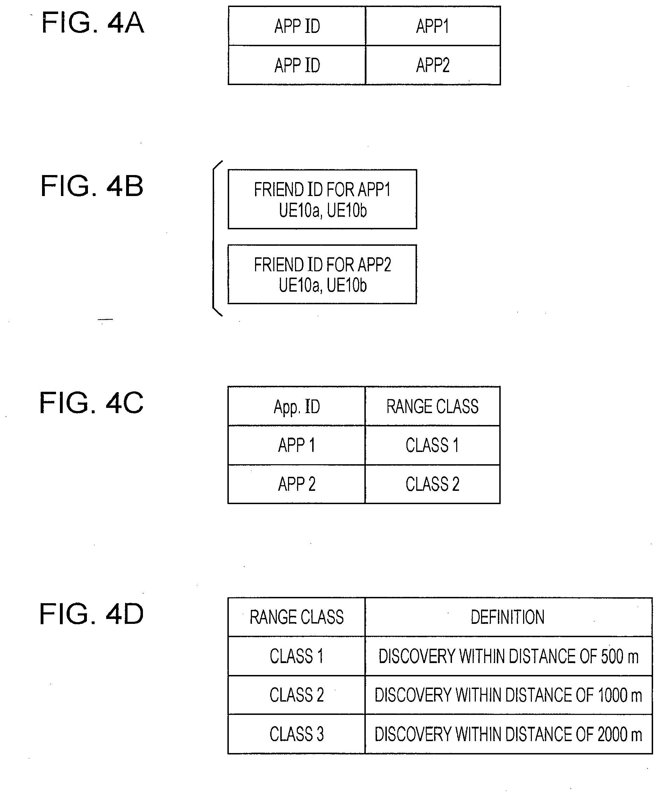

The APP list 142 stores an application available to the UE 10. Fig. 4A is a chart showing an example of the APP list 142. In the APP list 142, a piece of information on an application adapted to support ProSe is managed. The UE 10 can perform communication in an application managed by the APP list 142 through direct communication with a neighboring terminal. In Fig. 4A, the APP list 142 manages APP1 and APP2 as applications available to the UE 10.

Note that an application may be managed while being distinguished from a different application on the basis of whether VoIP or video streaming or data type (a video file, text, or the like).

Alternatively, communication using a piece of middleware, such as IMS, may be managed while being identified as a single application.

Alternatively, an individual application, such as Skype or LINE, may be managed while being identified by an application name or an application ID.

Alternatively, applications may be managed while being identified as different ones by a combination of the above-described methods.

An application available to the UE 10 may be installed at the fabrication stage or may be installed by a user operation.

Fig. 4B is a chart showing the friend list 144 by APP. In Fig. 4B, a friend list for APP1 and a friend list for APP2 are managed. In the friend list 144 by APP, a UE which can be discovered as a communication target UE in ProSe is managed.

Note that the UE 10a and a UE 10b shown in Fig. 4B are different from the UE 10. The UE 10a and the UE 10b have the same configuration as the UE 10, and a detailed description thereof will be omitted. The UE 10 also manages a range class as a piece of information designating a range of detection of a neighboring terminal or detection by a neighboring terminal. Fig. 4C is a chart showing an example in which a range class is associated with each APP and is held. In Fig. 4C, a range class for APP1 and a range class for APP2 are managed. By way of example, the range class for APP1 is managed as class 1, and the range class for APP2 is managed as class 2. Alternatively, the range class for APP1 may be managed as class 2, and the range class for APP2 may be managed as class 1.

The UE 10 also manages a piece of definition information for a range class. Fig. 4D is a chart showing an example in which a range class is defined on the basis of a piece of distance information. Fig. 4D shows discovery within a distance of 500 m as a definition of class 1, discovery within a distance of 1000 m as a definition of class 2, and discovery within a distance of 2000 m as a definition of class 3. As described above, a physical distance may be used for definition of a range class.

Note that the definitions of the range classes are not limited to the above-described ones and that any other method may be adopted. For example, belonging to an identical base station may be shown as the definition of class 1, belonging to an adjacent base station may be shown as the definition of class 2, and belonging to a base station two or more base stations apart may be shown as the definition of class 3. A network configuration may be used for definition of a range class.

Alternatively, transmission power of 50 db may be set as the definition of class 1, 100 db may be set as the definition of class 2, and 200 db may be set as the definition of class 3. The numerical values are illustrative only, and real values of radio field intensity or the like may be used. As described above, a piece of information designating transmission power of a signal to detect a neighboring terminal or for detection by a neighboring terminal may be used for definition.

As described above, a range class is a piece of information obtained by abstracting or coding a piece of information defining a range of detection.

Note that the range class definition 148 may be changed by being given notification from the network side. With this configuration, a mobile telecommunications carrier is enabled by dynamically controlling transmission power of a signal for detection of a neighboring terminal or detection by a neighboring terminal. Additionally, the mobile telecommunications carrier can dynamically update a piece of information, notification of which is to be given, and may give notification of an updated piece of information.

As a network-based notification method, for example, the eNB 45 may be provided with a transmission unit which transmits, to the UE 10, a piece of broadcast information to be transmitted through a BCCH as a broadcast information channel and transmit a piece of broadcast information with inclusion of a piece of definition information. The UE 10 may receive the piece of definition information and register the piece of definition information in the range class definition 148. In the notification, the UE 10 may associate a piece of information designating a range of detection of a neighboring terminal or detection by a neighboring terminal with a piece of information designating transmission power of a signal for detection of a neighboring terminal or detection by a neighboring terminal and transmit the pieces of information (for example, associate a piece of definition information with each range class and send the piece of definition information).

More specifically, a piece of definition information may be transmitted while being included in a system information block (SIB) of a piece of broadcast information. As a piece of definition information, a piece of information on a physical distance or a piece of information on a network configuration as already described earlier may be used or a real value of radio field intensity or the like may be used. As described above, the eNB 45 may notify the UE 10 of a piece of information designating transmission power of a signal for detection of a neighboring terminal or detection by a neighboring terminal as a piece of definition information. The UE 10 may receive the piece of broadcast information by the reception unit and register the received piece of information in the range class definition 148 to update the range class definition 148.

The eNB 45 may associate a piece of category information for a category, into which a UE capable of detection of a neighboring terminal and direct communication between neighboring terminals falls, with a piece of definition information in a system information block (SIB) of a piece of broadcast information and transmit the pieces of information. Since a piece of broadcast information is a piece of information to be received by all UEs present in a coverage area of the eNB 45, it is possible to prevent a UE with no support for ProSe from analyzing an SIB including a piece of definition information.

For example, the UE 10 can manage a piece of information on the capability to support ProSe in advance, detect that a piece of category information indicating support for ProSe is included in a received piece of broadcast information, and register and update a piece of definition information associated with the piece of category information on the basis of the detection. In contrast, a UE with no support for ProSe has no capability indicated by the piece of category information and need not execute processing, such as referring to a piece of definition information included in an SIB or registering and updating the piece of definition information. As described above, the eNB 45 may notify an unspecified number of UEs which are to regenerate a piece of definition information by means of a piece of broadcast information. A piece of definition information may be transmitted not as a piece of definition information for a particular application but as a piece of definition information for all applications supporting ProSe.

The above-described pieces of information may be transmitted not by the eNB 45 but by the MME 40, the home authentication server 95, or the local authentication server 90. The UE 10 may register a received piece of information in the range class definition 148 to update the range class definition 148.

As a network-based notification method, for example, the eNB 45 may be provided with a transmission unit which transmits, to the UE 10, a piece of control information to be transmitted through a RACH which is a random access channel and transmit the piece of control information with inclusion of a piece of definition information.

A piece of control information to be transmitted through a RACH is a piece of control information which can be transmitted to a particular UE, and the eNB 45 can transmit a piece of definition information only to the UE 10 among a plurality of UEs present in the coverage area of the eNB 45.

The UE 10 may receive a piece of definition information and register the piece of definition information in the range class definition 148. In the notification, the UE 10 may associate a piece of information designating a range of detection of a neighboring terminal or detection by a neighboring terminal with a piece of information designating transmission power of a signal for detection of a neighboring terminal or detection by a neighboring terminal and transmit the pieces of information (for example, associate a piece of definition information with each range class and include the piece of definition information).

The above-described pieces of information may be transmitted not by the eNB 45 but by the MME 40, the home authentication server 95, or the local authentication server 90. The UE 10 may register a received piece of information in the range class definition 148 to update the range class definition 148.

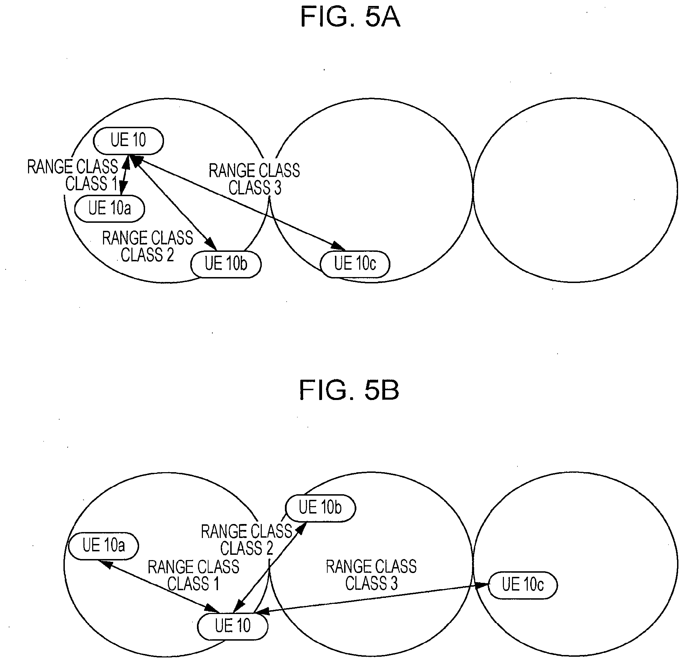

Figs. 5A and 5B show examples of discovery using a range class in the UE 10. Fig. 5A shows an example of a case where discovery is performed on the basis of a physical distance. If a range class is class 1, the UE 10 can discover only the UE 10a. If the range class is class 2, the UE 10 can discover the UE 10a and the UE 10b. If the range class is class 3, the UE 10 can discover the UE 10a, the UE 10b, and a UE 10c. Range classes here need not be defined on the basis of a physical distance, and discovery may be performed on the basis of, for example, radio field intensity.

Fig. 5B is an example in which a discovery target for a range class is defined in terms of cells. In Fig. 5B, if a range class is class 1, only the UE 10a that is present in a cell where a communication source UE is present can be discovered. If the range class is class 2, the cell where the communication source UE is present and a cell adjacent to the cell where the communication source UE is present are regarded as discovery targets, and the UE 10a and the UE 10b can be discovered. If the range class is class 3, a cell adjacent to the adjacent cell is regarded as a discovery target, in addition to the cell where the communication source UE is present and the cell adjacent to the cell where the communication source UE is present. Thus, the UE 10a, the UE 10b, and the UE 10c can be discovered.

### [1.2.2 Configuration of Local Authentication Server]

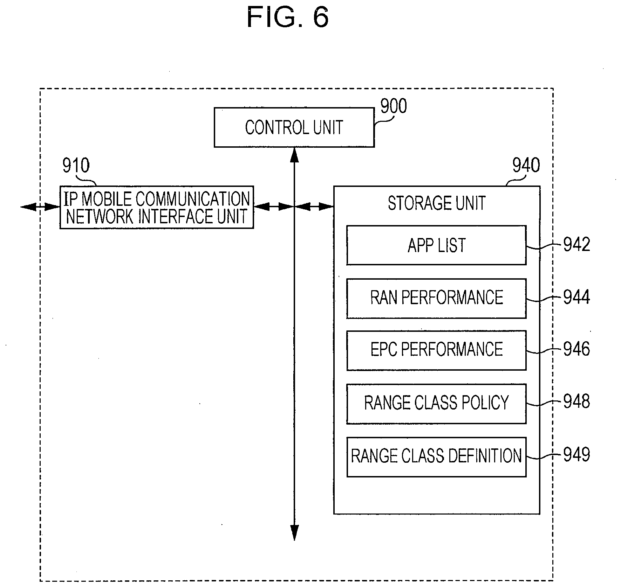

Fig. 6 shows the functional configuration of the local authentication server 90. Note that the local authentication server 90 is an authentication server managed by a mobile telecommunications carrier which performs ProSe-based discovery and ProSe-based communication. The home authentication server 95 is an authentication server managed by a mobile telecommunications carrier, to which the UE 10 subscribes. In order to perform ProSe-based discovery and communication in a network of the mobile telecommunications carrier, to which the UE 10 subscribes, the configuration of the local authentication server 90 may include the configuration of the home authentication server 95. In the authentication server 90, an IP mobile communication network interface unit 910 and a storage unit 940 are connected to a control unit 900 via a bus.

The control unit 900 is a functional unit for controlling the UE 10. The control unit 900 implements various processes by reading out and executing various programs stored in the storage unit 940.

The IP mobile communication network interface unit 910 is a functional unit for the authentication server 90 to connect to the IP mobile communication network 5.

The storage unit 940 is a functional unit having recorded thereon programs, data, and the like necessary for various operations of the UE 10. The storage unit 940 is composed of, for example, a semiconductor memory or a hard disk drive (HDD).

Additionally, the storage unit 940 manages an APP list 942, RAN performance 944, EPC performance 946, a range class policy 948, and a range class definition 949.

Note that the APP list 942, the RAN performance 944, the EPC performance 946, the range class policy 948, and the range class definition 949 to be described below may be stored in an external apparatus. For example, the pieces of information may be stored in the HSS 50 and may be referred to, registered in the storage unit 940, or updated by inquiring of the HSS 50 as needed.

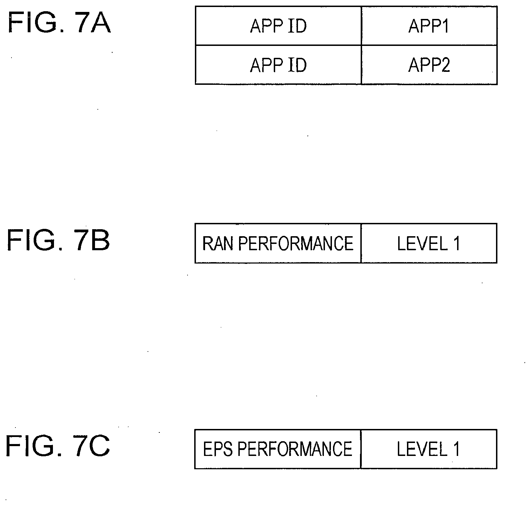

Fig. 7A shows an example of the APP list 942 managed by the local authentication server. Fig. 7A shows that the local authentication server manages the type of an application in which discovery is performed in the APP list 942 and the applications indicated by APP1 and APP2 can be used for discovery. In the APP list 942, a piece of information on an application adapted to support ProSe may be managed for each UE. In this case, the UE 10 can perform communication in an application managed by the APP list 942 through direct communication with a neighboring terminal.

Note that an application may be managed while being distinguished from a different application on the basis of whether VoIP or video streaming or data type (a video file, text, or the like).

Alternatively, communication using a piece of middleware, such as IMS, may be managed while being identified as a single application.

Alternatively, an individual application, such as Skype or LINE, may be managed while being identified by an application name or an application ID. Alternatively, applications may be managed while being identified as different ones by a combination of the above-described methods.

Fig. 6(b) shows an example of the RAN performance 944. In the RANperformance 944, a congestion status in the eNB 45 is managed. Here, the RAN performance 944 is managed as level 1. The RAN performance 944 may be managed as something other than level 1 in accordance with the congestion status in the eNB 45. Note that notification of the congestion status in the eNB 45 may be periodically given or may be given only when the congestion status changes. Additionally, notification of the congestion status in the eNB 45 need not be given from the eNB 45 and may be given from the MME 40 or the like as a proxy.

Fig. 7C shows an example of the EPS performance 946. In the EPSperformance 946, a congestion status in the core network 7 managed by a mobile telecommunications carrier is managed. Here, the EPS performance 946 is managed as level 1. The EPS performance 946 may be managed as something other than level 1 in accordance with the congestion status in the core network 7. Note that notification of the congestion status in the core network 7 may be periodically given by the MME 40 or may be given only when the congestion status changes.

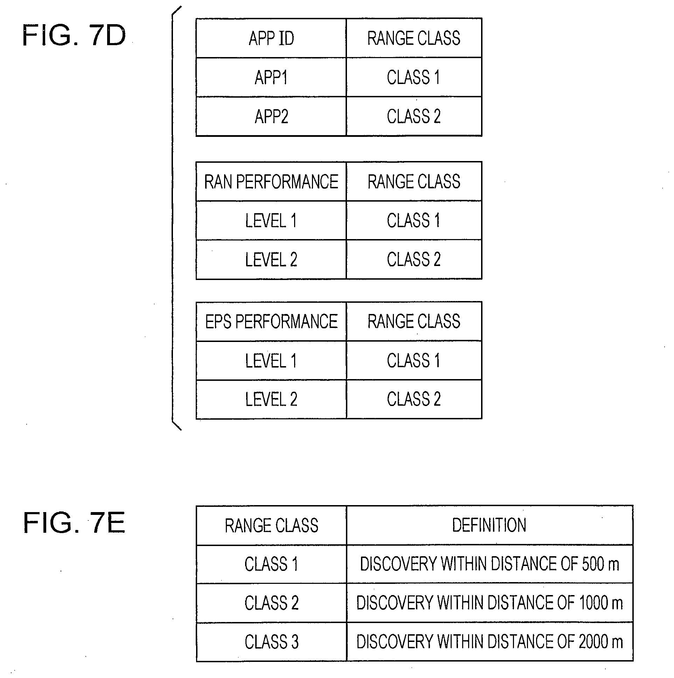

Fig. 7D shows an example of the range class policy 948. The range class policy 949 is used for range class judgment at the time of range class authentication. Fig. 7D shows that a range class is judged as class 1 for APP1 and is judged as class 2 for APP2. Fig. 7D also shows that the range class is judged as class 1 if the RAN performance is level 1 and is judged as class 2 if the RAN performance is level 2. Fig. 7D also shows that the range class is judged as class 1 if the EPS performance is level 1 and is judged as class 2 if the EPS performance is level 2.

A range class may also be judged in view of the application type, the RAN performance, and the EPS performance in combination. For example, if the UE 10 uses discovery in APP1, the RAN performance is level 1, and the EPS performance is level 2, a range class may be judged as class 2.

Fig. 7E is a chart showing the range class definition. Fig. 7E shows discovery within a distance of 500 m as a definition of class 1, discovery within a distance of 1000 m as a definition of class 2, and discovery within a distance of 2000 m as a definition of class 3. Note that the definitions for the range classes are not limited to the above-described ones and that any other method may be adopted.

Although a physical distance is used for definition, radio field intensity may be used for definition. Alternatively, each range class may indicate a cell as a discovery target. For example, only a UE which is present in a cell where a communication source UE is present may be regarded as a discovery target for class 1, UEs which are present in the cell where the communication source UE is present and a cell adjacent to the cell may be regarded as discovery targets for class 2, and UEs which are present in the cell where the communication source UE is present, the adjacent cell, and a cell adjacent to the adjacent cell may be regarded as discovery targets for class 3.

Note that the range class definition may be changed by being given notification by the network side. For example, notification from the network side may be transmitted from the eNB 45 through a system information block (SIB, which is a broadcast to be transmitted from the eNB 45 to a UE). Alternatively, notification may be given from the MME 40. Since examples of range class usage are the same as those shown in Figs. 5A and 5B, a description thereof will be omitted.

### [1.2.3 Configuration of Home Authentication Server]

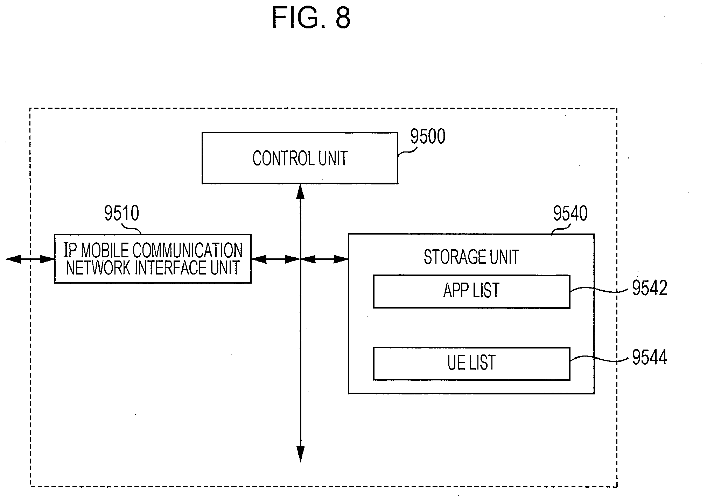

Fig. 8 shows the functional configuration of the home authentication server 95. Note that, in contrast to the local authentication server 90 that is an authentication server managed by a mobile telecommunications carrier which performs ProSe-based discovery and ProSe-based communication, the home authentication server 95 is an authentication server which is managed by a mobile telecommunications carrier, to which the UE 10 subscribes. In order to perform ProSe-based discovery and communication in a network of the mobile telecommunications carrier, to which the UE 10 subscribes, the configuration of the home authentication server 95 may include the configuration of the local authentication server 90.

In the home authentication server 95, an IP mobile communication network interface unit 9510 and a storage unit 9540 are connected to a control unit 9500 via a bus.

The control unit 9500 is a functional unit for controlling the UE 10. The control unit 9500 implements various processes by reading out and executing various programs stored in the storage unit 9540.

The IP mobile communication network interface unit 9510 is a functional unit for the home authentication server 95 to connect to the IP mobile communication network 5.

The storage unit 9540 is a functional unit having recorded thereon programs, data, and the like necessary for various operations of the UE 10. The storage unit 9540 is composed of, for example, a semiconductor memory or a hard disk drive (HDD). Additionally, the storage unit 9540 manages an APP list 9542 and a UE list 9544. Note that the APP list 9542 and the UE list 9544 may be stored in an external apparatus and that, for example, the HSS 50 can be used.

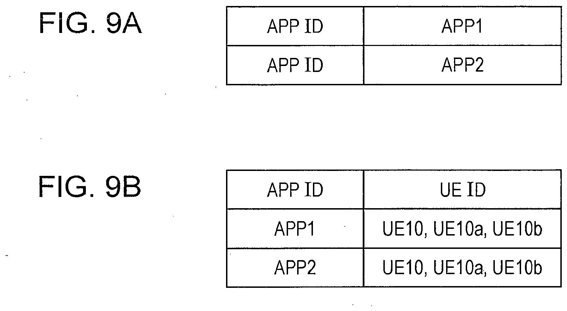

Fig. 9A shows an example of the APP list 9542. In Fig. 9A, applications given permission for ProSe by a mobile telecommunications carrier, to which the UE 10 and the UE 10a subscribe, are associated and managed. In Fig. 9A, APP1 and APP2 are managed as an example of the APP list 9542 managed by the mobile telecommunications carrier, to which the UE 10 and the UE 10a subscribe. However, the applications are not limited to APP1 and APP2, and any other application may be managed.

Fig. 9B shows an example of the UE list 9544. In Fig. 9B, for each of the applications given permission for ProSe by the mobile telecommunications carrier, to which the UE 10 and the UE 10a subscribe, UEs permitted to use the application are associated and managed. In Fig. 9B, as an example of the UE list 9544 managed by the mobile telecommunications carrier, to which the UE 10 and the UE 10a subscribe, UEs permitted to use ProSe in APP1 and APP2 are managed. The UE 10 and the UE 10a are permitted for APP1, and the UE 10 and the UE 10a are permitted for APP2. Applications to be managed are not limited to APP1 and APP2, and any other application may be managed. A UE permitted to use ProSe in APP3 may be managed.

### [1.3 Description of Processing]

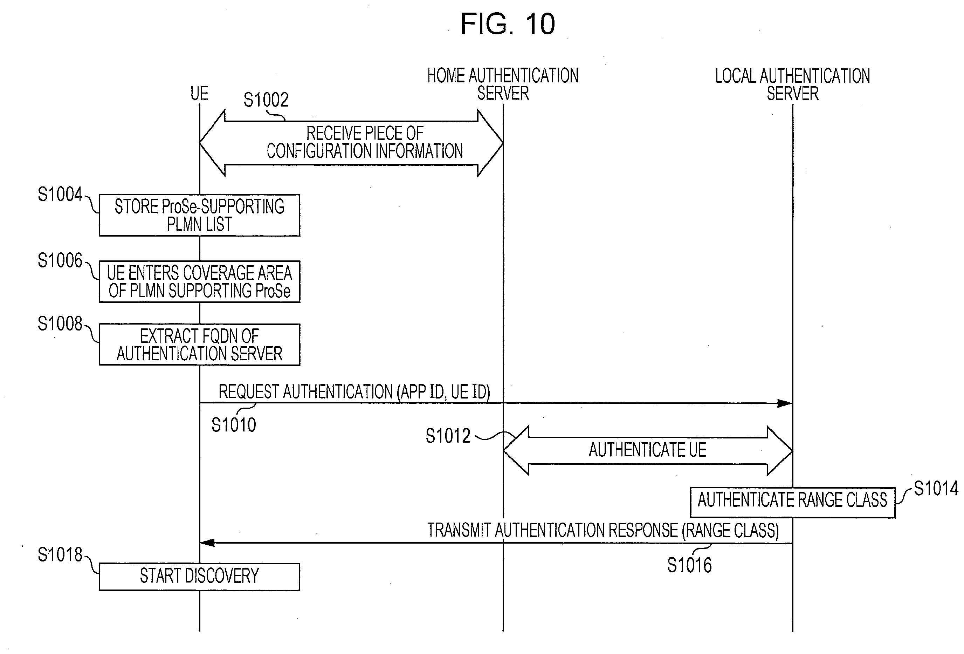

A specific procedure and a specific process in the above-described mobile communication system will now be described. A procedure when the UE 10 requests approval to neighboring terminal detection, the local authentication server approves neighboring terminal detection and gives notification of a range class, the UE 10 receives the range class together with approval to UE discovery and starts neighboring terminal detection will be described with reference to Fig. 10. Note that the local authentication server 90 is an authentication server managed by a mobile telecommunications carrier, discovery of which is used by the UE 10, and that the home authentication server 95 is an authentication server which is managed by the mobile telecommunications carrier, to which the UE 10 subscribes.

The UE 10 first executes an attach procedure upon, for example, power-on of a communication terminal and connects to the core network 7 via the LTE access network 80. The attach procedure is executed by the UE 10, the MME 40, the PGE 30, the SGW 35, the eNB 45, and the like through exchanging control messages.

Authentication of connection of the UE 10 to the core network 7 is provided through the attach procedure, and a communication path is established. After that, the UE 10 may transit to idle mode, which is a state without communication or may transit to active mode, which is a state during communication.

Note that the UE 10 can connect to the eNB 45 and may receive a piece of temporal information or a piece of frequency information used for ProSe discovery or ProSe communication from the eNB 45.

First, as shown in Fig. 10, the UE 10 receives a piece of configuration information from the home authentication server (S1002). At this time, the UE 10 receives, from the home authentication server, a piece of information for connection to the local authentication server and a piece of information on a mobile telecommunications carrier supporting ProSe. For example, the UE 10 receives a list of local authentication servers 90 and a list of networks (PLMNs) of mobile telecommunications carriers which are operated in the same country.

Note that, as for the received piece of configuration information, the UE 10 may select the local authentication server 90 in a network (PLMN) of a mobile telecommunications carrier which is the same as the UE 10a as a communication target UE. The UE 10a as a communication target UE may select the local authentication server in a network (PLMN) of the same mobile telecommunications carrier as the UE 10.

Note that the UE 10 may select the local authentication server 90 operated by a mobile telecommunications carrier, to which the UE 10 subscribes, and transmit an authentication request. Alternatively, the UE 10 may detect a mobile telecommunications carrier, to which a neighboring terminal as a Direct Discovery target subscribes, select the local authentication server 90 operated by the mobile telecommunications carrier, to which the neighboring terminal subscribes, and transmit an authentication request. Alternatively, the UE 10 may detect the local authentication server 90, to which a neighboring terminal as a Direct Discovery target transmits an authentication request, select the local authentication server 90, by which the neighboring terminal is authenticated, and transmit an authentication request. Alternatively, the UE 10 may select the local authentication server configured to be in a network (PLMN) of the mobile telecommunications carrier, to which the UE 10 subscribes, and transmit an authentication request. Alternatively, the UE 10 may detect a mobile telecommunications carrier, to which a neighboring terminal as a Direct Discovery target subscribes, select the local authentication server 90 that is configured to be in a network (PLMN) of the mobile telecommunications carrier, to which the neighboring terminal subscribes, and transmit an authentication request. Alternatively, the UE 10 may detect a PLMN, to which a neighboring terminal as a Direct Discovery target connects, select the local authentication server 90 in the PLMN, to which the neighboring terminal connects, and transmit an authentication request.

The UE 10 then stores the list of networks (PLMNs) of mobile telecommunications carriers supporting ProSe (S1004). Note that a PLMN supporting ProSe may be a piece of information on a network of a mobile telecommunications carrier which is affiliated with the mobile telecommunications carrier, to which the UE 10 subscribes. The UE 10 judges whether a PLMN, a coverage area of which covers the UE 10, supports ProSe, using the list of PLMNs supporting ProSe stored in S1004.

Note that, as for the stored PLMNs, the UE 10 may select the local authentication server 90 in a network (PLMN) of the same mobile telecommunications carrier as the UE 10a that is a communication target UE. The UE 10a as the communication target UE may select the local authentication server in a network (PLMN) of the same mobile telecommunications carrier as the UE 10.

The UE 10 then enters a coverage area of a PLMN supporting ProSe (S1006). The UE 10 present in a coverage area of the PLMN supporting ProSe extracts an FQDN indicating a piece of positional information of a local authentication server for authentication of ProSe usage (S1008). The FQDN of the local authentication server may be included in the piece of ProSe-related configuration information received in S1002 and may be managed in advance by the UE 10.

Note that, as for the extracted FQDN, the UE 10 can select the local authentication server 90 in the network (PLMN) of the same mobile telecommunications carrier as the UE 10a that is a communication target UE. The UE 10a as the communication target UE can select the local authentication server in the network (PLMN) of the same mobile telecommunications carrier as the UE 10.

As a method for selecting the same local authentication server, for example, the UE 10 may select the local authentication server 90 from the list of PLMNs by detecting the network (PLMN) of the mobile telecommunications carrier, to which the UE 10a as a communication partner subscribes. The UE 10a may similarly select the local authentication server 90 from a list of PLMNs by detecting the network of the mobile telecommunications carrier, to which the UE 10 as a communication source subscribes.

Alternatively, the UE 10a as the communication target UE may decide to use the local authentication server in the PLMN, to which the communication source UE 10 subscribes, detect the PLMN, to which the UE 10 as the communication source UE subscribes, and determine the same local authentication server as the UE 10. Alternatively, the UE 10 as the communication source UE may decide to use the local authentication server in the PLMN, to which the communication target UE 10a subscribes, detect the PLMN, to which the UE 10a as the communication target UE subscribes, and determine the same local authentication server as the UE 10a.

The UE 10 then uses the FQDN of the local authentication server extracted in S1008 to make a request for authentication to the local authentication server 90 (S1010). The request for authentication may be a service request message for provision of a ProSe service by the UE 10 or a registration request message for registration of the UE 10 in a ProSe service. A target ProSe service may be a service for neighboring terminal detection, a service which provides establishment of a direct communication path with a neighboring communication terminal, or a service including the both functions.

At this time, the UE 10 gives notification with inclusion of a piece of terminal information for identification of the UE 10 itself, a piece of information (APPID: APP1 on an application used in ProSe, or a piece of information (UEID: the UE 10a) on a UE as a communication partner in ProSe. A UEID, by which the UE 10 or the UE 10a is identified, may be an international mobile subscriber identity (IMSI) or a piece of user identification information used in an application.

Additionally, the UE 10 may include a range class used for discovery. The range class may be included in association with the piece of application identification information.

If ProSe-based discovery or communication is performed in the PLMN, to which the UE 10 subscribes, the UE 10 may transmit an authentication request to the home authentication server 95.

The local authentication server 90 after reception of the authentication request from the UE 10 authenticates the UE 10 using the APP ID and the UE ID included in the authentication request (S1012). At this time, the local authentication server 90 performs authentication through transmitting the piece of information on the UE 10, the piece of information on the UE 10a to be discovered by the UE 10, and the piece of information (APP1) on the application to be used with the UE 10a in ProSe to the home authentication server 95, to which the UE 10 subscribes. The home authentication server 95 confirms using the APP list 9542 that APP1 is an application, to which permission for ProSe is given, and confirms using the UE list 9544 that the UE 10 is a UE, to which permission for ProSe is given for APP1. The home authentication server after the confirmation of ProSe usage using the APP list 9542 and the UE list 9544 transmits a piece of information indicating that authentication is successful to the local authentication server.

The local authentication server 90 after detection of the authentication of discovery of the UE 10a in APP1 by the UE 10 from the home authentication server 90 uses the APP list 942 to authenticate that the UE 10 is capable of discovery in APP1. Since the APP list includes APP1, the local authentication server 90 permits the UE 10 to perform discovery in APP1.

Note that although application type is performed in the local authentication server 95 after application type and UE authentication in the home authentication server 90 in the present embodiment, application type and UE authentication may be performed in the home authentication server 90 after application type authentication in the local authentication server 95.

If authentication is requested from the home authentication server 95 in order to perform ProSe-based discovery or communication in the network of the mobile telecommunications carrier, to which the UE 10 subscribes, the home authentication server 95 may authenticate the UE 10.

The local authentication server 90 then performs range class authentication (S1014). The local authentication server 90 determines a range class in the range class authentication.

The local authentication server 90 may determine the range class in accordance with an application. As for the determination, the range class may be determined on the basis of the piece of application-related information that is transmitted from the UE 10 and a piece of information associating an application and a range class which is managed by the range class policy 146.

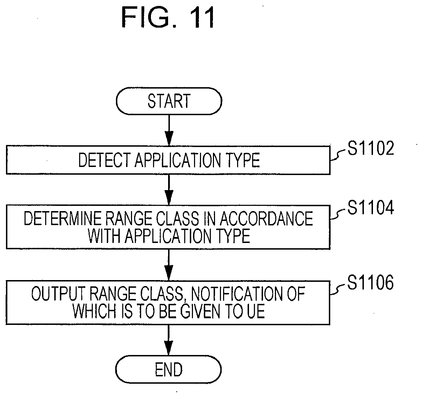

Fig. 11 shows a flowchart of a method for determining a range class for range class authentication. In Fig. 11, an application type is first detected (S1102). The application type is APP1, notification of which is given by the UE 10. The range class is determined in accordance with the application type (S1104). The local authentication server 90 determines the range class from the range class policy 948. Note that since the application type is APP1, and the range class is class 1 in the range class policy 948 if the application type (APP ID) is APP1, the range class is determined as class 1.

The local authentication server 90 after the determination of the range class outputs the range class, notification of which is to be given to the UE 10 (S1106). Through the above-described procedure, the local authentication server 90 may determine the range class in accordance with the application type.

The local authentication server 90 may determine the range class in accordance with, for example, congestion of an access network. The determination may be made on the basis of a piece of information associating the RAN performance indicating a communication status of the access network and the range class that is managed by the range class policy 146.

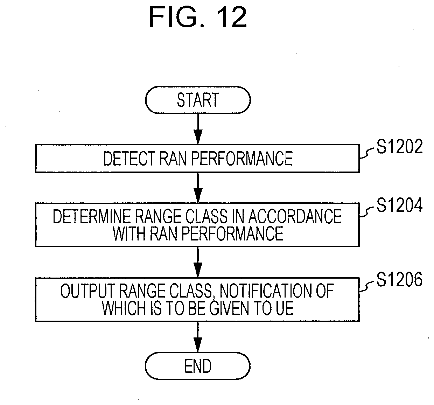

Fig. 12 shows a flowchart of a method for determining a range class for range class authentication. In Fig. 12, RAN performance is first detected (S1202). The RAN performance indicates a congestion status in the eNB 45. The RAN performance is managed in the RAN performance 944 in the local authentication server 90 and is level 1.

Notification of the RAN performance may be given in advance by the eNB 45 or the MME 40. Alternatively, the eNB 45 may give notification of the status in response to, for example, a change in the status, and the local authentication server 90 may perform updating on the basis of the piece of information, notification of which is given.

The local authentication server 90 may update the range class definition 949 on the basis of a piece of information, notification of which is given. More specifically, the local authentication server 90 may newly determine a piece of information designating transmission power of a signal to detect a neighboring terminal, such as a piece of information indicating a physical distance, a network configuration, or the value of radio field intensity from transmission power or the like, on the basis of a piece of information, notification of which is given, and update the range class definition 949.

The local authentication server 90 then determines the range class in accordance with the RAN performance (S1204). Since the RAN performance is level 1, and the range class is class 1 in the range class policy 948 if the RAN performance is level 1, the range class is determined as class 1.

The local authentication server 90 after the determination of the range class outputs the range class, notification of which is to be given to the UE 10 (S1206). Through the above-described procedure, the local authentication server 90 may determine the range class in accordance with the RAN performance.

The local authentication server 90 may determine the range class in accordance with, for example, congestion of a core network. The determination may be made on the basis of a piece of information associating the EPS performance indicating a communication status of the access network and a range class which is managed by the range class policy 146.

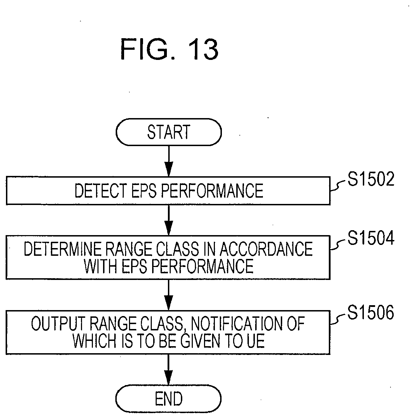

Fig. 13 shows a flowchart of a method for determining a range class for range class authentication. In Fig. 13, EPS performance is first detected (S1302). The EPS performance indicates a congestion status in the core network 7. The EPS performance is managed in the EPS performance 946 in the local authentication server 90 and is level 1.

Note that notification of the EPS performance is given in advance by the MME 40. The MME 40 may give notification of the status in response to, for example, a change in the status, and the local authentication server 90 may perform updating on the basis of the piece of information, notification of which is given.

Alternatively, the local authentication server 90 may update the range class definition 949 on the basis of a piece of information, notification of which is given. More specifically, the local authentication server 90 may newly determine a piece of information designating transmission power of a signal to detect a neighboring terminal, such as a piece of information indicating a physical distance, a network configuration, or the value of radio field intensity from transmission power or the like, on the basis of a piece of information, notification of which is given, and update the range class definition 949.

The local authentication server 90 then determines the range class in accordance with the EPS performance (S1304). Since the EPS performance is level 1, and the range class is class 1 in the range class policy 948 if the EPS performance is level 1, the range class is determined as class 1.

The local authentication server 90 after the determination of the range class outputs the range class, notification of which is to be given to the UE 10 (S1306). Through the above-described procedure, the local authentication server 90 can determine the range class in accordance with the EPS performance.

Note that the range class may be determined by combining the methods illustrated in Figs. 11 to 13. For example, if notification of APP1 is given, and the EPS performance is level 2, the range class policy 948 shows that the range class permitted for APP1 is class 1 and that the range class is class 2 if the EPS performance is level 2. In this case, the range class may be determined as class 2.

If notification of the range class is given by the UE 10, the range class received from the UE 10 may be permitted and be authenticated. At this time, the range class determined in the above-described manner may be used for permission judgment.

With the above-described procedure, the local authentication server 95 can authenticate the UE 10 with the home authentication server 90. If authentication is requested from the home authentication server 95 in order to perform ProSe-based discovery or communication in the network of the mobile telecommunications carrier, to which the UE 10 subscribes, the home authentication server 95 may authenticate the UE 10. As a method by which the home authentication server authenticates the local authentication server, the above-described method can be similarly used.

Referring back to Fig. 10, the local authentication server 90 after the determination and the authentication of the range class in S1014 transmits a response to the message transmitted by the UE 10 (S1016). At this time, the local authentication server 90 transmits a piece of information on the range class (class 1) together with a piece of information on the authentication of the UE 10. The authentication server 97 may also transmit a piece of time- or frequency-related information for transmitting a signal for detection of a neighboring terminal by the UE 10 or a signal for detection of the UE 10 by a neighboring terminal. For example, several candidates for a piece of temporal information or a piece of frequency information usable for ProSe discovery or ProSe-based communication may be assigned in advance, and notification of a piece of information indicating which one of the candidates to use may be given.

The local authentication server 90 may transmit with inclusion of the range class as a piece of information designating a range of detection of a neighboring terminal or detection by a neighboring terminal or may further refer to the range class definition 949 and transmit with inclusion of a piece of definition information corresponding to the determined range class. As the piece of definition information, a piece of information designating transmission power of a signal to detect a neighboring terminal, such as a piece of information indicating a physical distance, a network configuration, or the value of radio field intensity from transmission power or the like, may be transmitted as described earlier.

The UE 10 receives the response from the local authentication server 90 and senses that the UE 10 is permitted to perform ProSe-based discovery with the UE 10a in APP1. At this time, the UE 10 extracts a piece of information on the range class (class 1) for discovery of the UE 10a in APP1.

If the UE 10 requests authentication from the home authentication server 95 in order to perform ProSe-based discovery or communication in the network of the mobile telecommunications carrier, to which the UE 10 subscribes, the home authentication server 95 may transmit an authentication response to the UE 10. At this time, the home authentication server 95 may include the range class in the authentication response to the UE 10. The UE 10 then starts discovery using the piece of information on the range class (class 1) (S1018). At this time, the UE 10 determines a discovery area using the range class definition 148. Since the range class is class 1, the UE 10 decides to make a discovery within a distance of 500 m.

As a discovery method, the UE 10 may transmit a signal for detection of a neighboring terminal or detection by a neighboring terminal. Alternatively, a control message requesting establishment of a direct communication path from a neighboring communication terminal, such as the UE 10a, may be used.

A signal for detection of a neighboring terminal or detection by a neighboring terminal may be transmitted on the basis of a separate particular frequency or a separate piece of temporal information, such as transmission timing, such that whether the signal is intended for detection of a neighboring terminal or intended for detection by a neighboring terminal can be detected on the basis of the frequency or the piece of temporal information, such as transmission timing. A transmitted signal may be transmitted with inclusion of a piece of control information, and the piece of control information may be transmitted with inclusion of a piece of identification information indicating whether the signal is a signal intended for detection of a neighboring terminal or a signal intended for detection by a neighboring terminal.

With this configuration, when a communication terminal located in a neighborhood receives a signal from the UE 10, the communication terminal can detect, on the basis of frequency and a piece of temporal information, such as transmission timing, whether a signal for detection by a neighboring terminal is intended for detection of a neighboring terminal.

The UE 10 may calculate transmission power of a signal for detection of a neighboring terminal or a signal for detection by a neighboring terminal necessary for discovery on the basis of a received range class and the range class definition 148. Note that, as described earlier, a piece of definition information stored in the range class definition 148 may be dynamically updated via a network. For example, the UE 10 may receive a piece of definition information from the eNB 45 and update the range class definition 148.

The UE 10 may detect, on the basis of a received piece of information, whether a network supports a ProSe-related service and determine, on the basis of a result of the detection, whether to make a request for authentication to the local authentication server 90. The request for authentication may be a service request message for provision of a ProSe service by the UE 10 or a registration request message for registration of the UE 10 in a ProSe service. A target ProSe service may be a service for neighboring terminal detection, a service for provision of establishment of a direct communication path with a neighboring communication terminal, or a service including the both functions.

As described above, a piece of information indicating whether a network, to which the UE 10 connects, supports a ProSe-related service, such as neighboring terminal detection or establishment of a communication path between neighboring terminals, may be received from the network, and it may be judged that the UE 10 transmits a request message if the network supports a ProSe-related service and does not transmit a request message if the network does not support a ProSe-related service.

The UE 10 can perform ProSe-based discovery or direct communication with the UE 10a that subscribes to the same mobile telecommunications carrier. That is, the UE 10 may perform neighborhood detection of the UE 10a by selecting the local authentication server 90 in the network (PLMN) of the same mobile telecommunications carrier as the UE 10a that is a communication target UE and performing discovery after authentication by the authentication server 90.

The UE 10a may be subjected to neighborhood detection by the UE 10 through selecting the local authentication server 90 in a network (PLMN) of the same mobile telecommunications carrier as the UE 10 that is a communication source UE and being discovered by the UE 10 after authentication by the authentication server 90.

Additionally, the UE 10 can perform ProSe-based discovery or direct communication with the UE 10a that subscribes to a different mobile telecommunications carrier. That is, the UE 10 may perform neighborhood detection of the UE 10a by selecting the local authentication server 90 in the network (PLMN) of the same mobile telecommunications carrier as the UE 10a that is a communication target UE and performing discovery after authentication by the authentication server 90.

The UE 10a may be subjected to neighborhood detection by the UE 10 by selecting the local authentication server 90 in the network (PLMN) of the same mobile telecommunications carrier as the UE 10 that is a communication source UE and being discovered by the UE 10 after authentication by the authentication server 90.

With the above-described procedure, the UE 10 may request authentication of discovery, the local authentication server may authenticate a range class, and the UE 10 may receive the range class together with authentication of UE discovery and start discovery on the basis of a piece of information (for example, the range class) designating a range of detection of a neighboring terminal or detection by a neighboring terminal and a piece of information designating transmission power of a signal to detect a neighboring terminal, such as a piece of information indicating a physical distance, a network configuration, and the value of radio field intensity from transmission power or the like.

The UE 10 may receive, through a response from the local authentication server 90, a piece of information designating transmission power of a signal to detect a neighboring terminal, such as a piece of information indicating a physical distance, a network configuration, and the value of radio field intensity from transmission power or the like. In this case, transmission power of a signal for detection of a neighboring terminal or a signal for detection by a neighboring terminal necessary for discovery may be determined on the basis of the received piece of information. As described above, the UE 10 may execute a communication procedure for detection of a communication terminal which connects to an LTE access network and detection by a communication terminal by executing a step of executing an attach procedure and connecting to the LTE access network, a step of transmitting a request message requesting authentication of execution of neighboring communication terminal detection to an authentication server configured to be included in a core network connected to the LTE access network or a packet data network connected to the core network, a step of receiving a response message which is a response to the request message and contains a piece of information designating a range of detection of a neighboring terminal, a step of determining transmission power on the basis of the piece of information specifying the range of detection of a neighboring terminal, and a step of transmitting, with the transmission power, a signal to detect a neighboring terminal or a signal for detection by a neighboring terminal.

With the above-described procedure, a UE can determine a piece of frequency information, a piece of temporal information, such as timing, and transmission power or the like which determines a range of detection for transmitting a signal for detection of a neighboring terminal or a signal for detection by a neighboring terminal necessary for discovery and execute Direct Discovery that involves detection of a neighboring terminal or detection by a neighboring terminal.

Note that the UE 10 may transmit a signal to detect a neighboring terminal or a signal for detection by a neighboring terminal to a communication terminal which subscribes to the mobile telecommunications carrier, to which the UE 10 subscribes, in accordance with the aforementioned procedure. Alternatively, the UE 10 may transmit a signal to detect a neighboring terminal or a signal for detection by a neighboring terminal to a communication terminal which subscribes to a mobile telecommunications carrier different from the mobile telecommunications carrier, to which the UE 10 subscribes. Alternatively, the UE 10 may transmit a signal to detect a neighboring terminal or a signal for detection by a neighboring terminal to a communication terminal which is authenticated by the same local authentication server 90.

A mobile telecommunications carrier can determine a range of detection of a neighboring terminal by the UE 10 or a range of detection of the UE 10 by a neighboring terminal by controlling a piece of information, notification of which is given to the UE 10 by the local authentication server 90 or the eNB 45. More specifically, it is possible to control a range of arrival of a signal for detection of a neighboring terminal or a signal for detection by a neighboring terminal to be transmitted by the UE 10.

### [2. Second Embodiment]

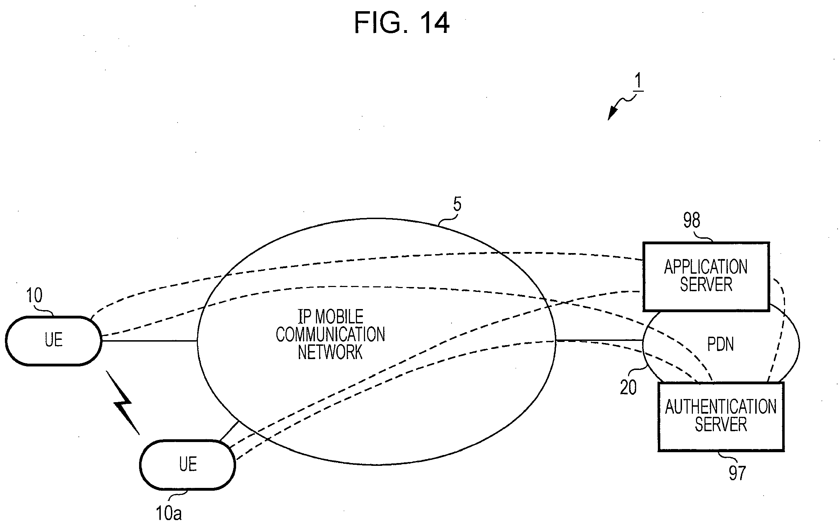

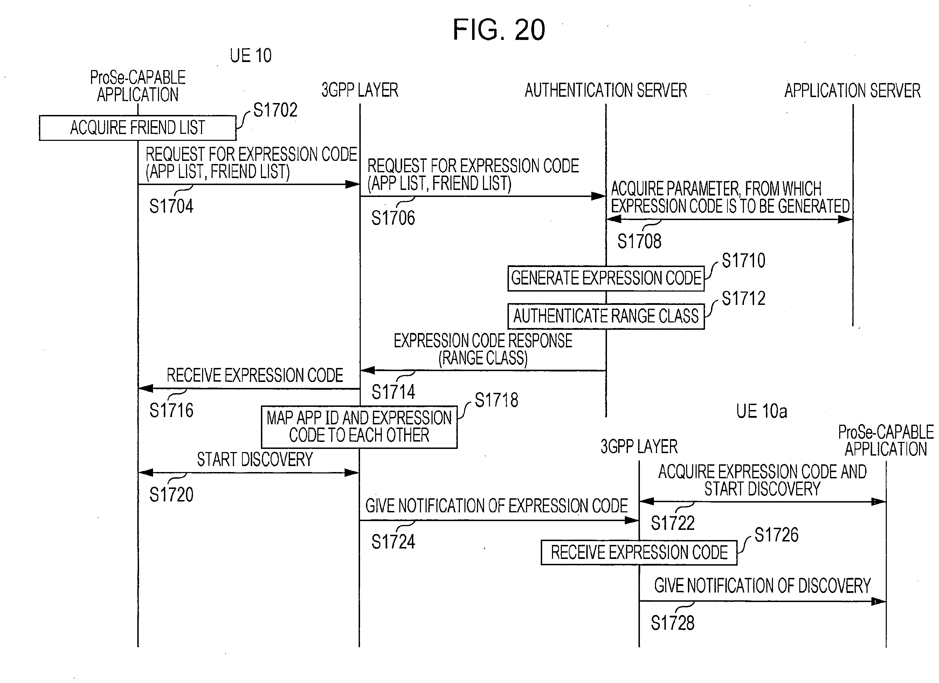

A second embodiment will be described. The second embodiment is different in the configurations of apparatuses in a mobile communication system. Not the mobile communication system in Fig. 1 but a mobile communication system in Fig. 14 is used in the present embodiment. More specifically, in contrast to the first embodiment, in which a piece of information for identification of a UE (user) is managed in the local authentication server 90 and the home authentication server 95, a piece of information on a UE (user) may be managed in an authentication server 97 and an application server 98 in the present embodiment. The present embodiment is different in that a UE performs discovery after signal exchange between a 3GPP layer which is managed by a mobile telecommunications carrier and an application layer which is not managed by a mobile telecommunications carrier. More specifically, not the procedure shown in Fig. 10 but the procedure shown in Fig. 20 is used.

The overview of the mobile communication system according to the present embodiment will be described with reference to Fig. 14. Fig. 14 is a diagram for explaining the overview of a mobile communication system 2 according to the present embodiment. As shown in Fig. 14, the mobile communication system 2 is composed of a UE (mobile station apparatus) 10, a UE (mobile station apparatus) 10a, and a packet data network (PDN) 20, which are connected via an IP mobile communication network 5. The authentication server 97 and the application server 98 are arranged in the PDN 20. The authentication server 97 is an authentication server which is managed by a mobile telecommunications carrier of a network where the UE 10 or the UE 10a performs discovery.

The authentication server 97 may be arranged at any location as long as the authentication server 97 is in the PDN 20. Note that the UE 10 and the UE 10a can ensure secure communication with the authentication server 97 and perform transmission/reception of a piece of control information and data. The authentication server 97 can also ensure secure communication with the application server 98 and perform transmission/reception of a piece of control information and data.

The application server 98 that transmits, with transmission power, a signal to detect a neighboring terminal or a signal for detection by a neighboring terminal is an external server which is not managed by a mobile telecommunications carrier and is a server, with which an application used by the UE 10 and the UE 10a communicates to receive a service. The UE 10 and the UE 10a can receive a service by communicating with the application server 98, regardless of whether to receive a ProSe service.

The UE 10 and the UE 10a are in a neighborhood and are arranged at locations where the UE 10 and the UE 10a can sense each other in discovery for starting ProSe-based data transmission/reception.

The IP mobile communication network 5 has the same configuration as in the first embodiment, and a detailed description thereof will be omitted. As described in the first embodiment, the IP mobile communication network 5 may be, for example, a network composed of a wireless access network and a core network which are operated by a mobile telecommunications carrier or may be a broadband network which is operated by a fixed-line telecommunications carrier.

The PDN 20 has the same configuration as in the first embodiment. As described in the first embodiment, the PDN 20 is a network which provides a network service that exchanges packet data and is, for example, the Internet or IMS.

### [2.2 Configurations of Apparatuses]

Next, the configuration of each apparatus will be briefly described with reference to the drawings.

### [2.2.1 Configuration of UE]

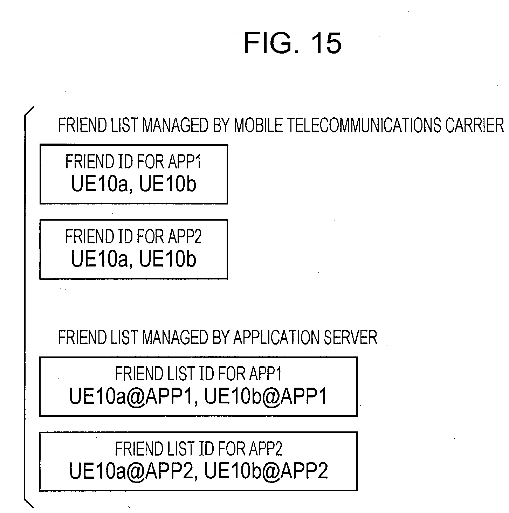

The functional configuration of the UE 10 is the same as the functional configuration described in the first embodiment except for the configuration of a friend list 144 in a storage unit 140. Fig. 15 shows the friend list 144 according to the second embodiment. In the friend list 144 shown in Fig. 15, a friend list (expression code) which is managed by a mobile telecommunications carrier and a friend list which is managed by an application are managed. In Fig. 15, friend IDs for APP1 (the UE 10a and a UE 10b) and friend IDs for APP2 (the UE 10a and the UE 10b) in the UE 10 are shown as the friend list to be managed by a mobile telecommunications carrier, and friend IDs for APP1 (UE10a@APP1 and UE10b@APP1) and friend IDs for APP2 (UE10a@APP2 and UE10b@APP2) in the UE 10 are shown as the friend list to be managed by the application server 98. As described above, the present embodiment is different from the first embodiment in that a friend list to be managed by a mobile telecommunications carrier and a friend list to be managed by an application server are separately managed.

Note that, in the present embodiment, a range class is a piece of information obtained by abstracting or coding a piece of information defining a range of detection, like the first embodiment, and that a range class definition 148 may be changed by being given notification from the network side. With this configuration, a mobile telecommunications carrier is enabled by dynamically controlling transmission power of a signal for detection of a neighboring terminal or detection by a neighboring terminal. Additionally, the mobile telecommunications carrier can dynamically update a piece of information, notification of which is to be given, and may give notification of an updated piece of information.

As a network-based notification method, for example, an eNB 45 may be provided with a transmission unit which transmits, to the UE 10, a piece of broadcast information to be transmitted through a BCCH as a broadcast information channel and transmit a piece of broadcast information with inclusion of a piece of definition information. The UE 10 may receive the piece of definition information and register the piece of definition information in the range class definition 148. In the notification, the UE 10 may associate a piece of information designating a range of detection of a neighboring terminal or detection by a neighboring terminal with a piece of information designating transmission power of a signal for detection of a neighboring terminal or detection by a neighboring terminal and transmit the pieces of information (for example, associate a piece of definition information with each range class and send the piece of definition information).

More specifically, a piece of definition information may be transmitted while being included in a system information block (SIB) of a piece of broadcast information. As a piece of definition information, a piece of physical distance information or a piece of network configuration information as already described earlier may be used or a real value of radio field intensity or the like may be used. As described above, the eNB 45 may notify the UE 10 of a piece of information designating transmission power of a signal for detection of a neighboring terminal or a signal for detection by a neighboring terminal as a piece of definition information. The UE 10 may receive a piece of broadcast information by a reception unit and register the received piece of information in the range class definition 148 to update the range class definition 148.

The eNB 45 may associate a piece of category information for a category, into which a UE capable of detection of a neighboring terminal and direct communication between neighboring terminals falls, with a piece of definition information in a system information block (SIB) of a piece of broadcast information and transmit the pieces of information. Since a piece of broadcast information is a piece of information to be received by all UEs present in a coverage area of the eNB 45, it is possible to prevent a UE with no support for ProSe from analyzing an SIB including a piece of definition information.

For example, the UE 10 can manage a piece of information on the capability to support ProSe in advance, detect that a piece of category information indicating support for ProSe is included in a received piece of broadcast information, and register and update a piece of definition information associated with the piece of category information on the basis of the detection. In contrast, a UE with no support for ProSe has no capability indicated by the piece of category information and need not execute processing, such as referring to a piece of definition information included in an SIB or registering and updating the piece of definition information. As described above, the eNB 45 may notify an unspecified number of UEs which are to regenerate a piece of definition information by means of a piece of broadcast information. A piece of definition information may be transmitted not as a piece of definition information for a particular application but as a piece of definition information for all applications supporting ProSe.

The above-described pieces of information may be transmitted not by the eNB 45 but by an MME 40, the home authentication server 95, or the local authentication server 90. The UE 10 may register a received piece of information in the range class definition 148 to update the range class definition 148. As a network-based notification method, for example, the eNB 45 may be provided with a transmission unit which transmits, to the UE 10, a piece of control information to be transmitted through a RACH which is a random access channel and transmit the piece of control information with inclusion of a piece of definition information.

A piece of control information to be transmitted through a RACH is a piece of control information which can be transmitted to a particular UE, and the eNB 45 can transmit a piece of definition information only to the UE 10 among a plurality of UEs present in the coverage area of the eNB 45.

The UE 10 may receive a piece of definition information and register the piece of definition information in the range class definition 148. In the notification, the UE 10 may associate a piece of information designating a range of detection of a neighboring terminal or detection by a neighboring terminal with a piece of information designating transmission power of a signal for detection of a neighboring terminal or detection by a neighboring terminal and transmit the pieces of information (for example, associate a piece of definition information with each range class and send the piece of definition information).

The above-described pieces of information may be transmitted not by the eNB 45 but by the MME 40, the home authentication server 95, or the local authentication server 90. The UE 10 may register a received piece of information in the range class definition 148 to update the range class definition 148.

### [2.2.2 Configuration of Authentication Server]

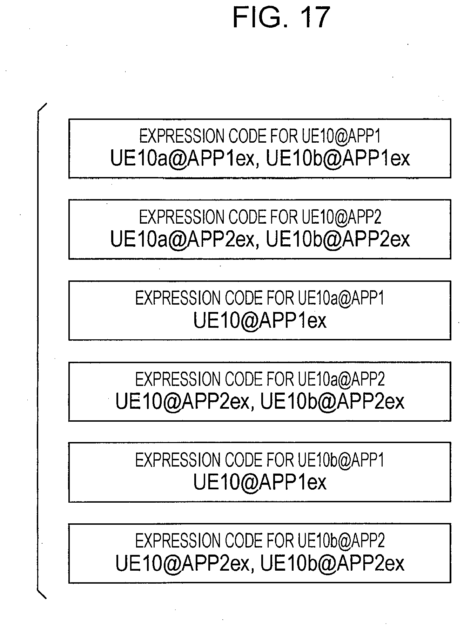

Fig. 17 shows the functional configuration of the authentication server 97. Note that, in the present embodiment, an authentication procedure is performed using a piece of application-level user identification information to be used by an application and a piece of user identification information stipulated in a 3GPP system. Assume a case with a plurality of applications. It is assumed in this case that the applications use pieces of identification information different in format and organization. For this reason, a piece of identification information for an application may be managed in association with a piece of user identification information stipulated in a 3GPP system which has a single format or organization. An example using an expression code will be mainly described below as an example of a piece of user identification information at a 3GPP system level. In the authentication server 97, an IP mobile communication network interface unit 9710 and a storage unit 9740 are connected to a control unit 9700 via a bus.

The control unit 9700 is a functional unit for controlling the authentication server 97. The control unit 9700 implements various processes by reading out and executing various programs stored in the storage unit 9740.

The IP mobile communication network interface unit 9710 is a functional unit for the authentication server 97 to connect to the IP mobile communication network 5.

The storage unit 9740 is a functional unit having recorded thereon programs, data, and the like necessary for various operations of the authentication server 97. The storage unit 9740 is composed of, for example, a semiconductor memory or a hard disk drive (HDD).

Additionally, the storage unit 9740 manages an APP list 9742, an expression code 9743, RAN performance 9744, EPC performance 9746, a range class policy 9748, and a range class definition 9749.

Note that the APP list 9742, the RAN performance 9744, the EPC performance 9746, the range class policy 9748, and the range class definition 9749 may be stored in an external apparatus. For example, the pieces of information may be stored in an HSS 50 and may be referred to or updated by inquiring of the HSS 50 as needed. Since the configuration shown in Fig. 7A in the first embodiment can be similarly used for the APP list 9742, a detailed description of the APP list 9742 will be omitted. Since the configuration shown in Fig. 7B in the first embodiment can be similarly used for the RAN performance 9744, a detailed description of the RAN performance 9744 will be omitted. Since the configuration shown in Fig. 7C in the first embodiment can be similarly used for the EPS performance 9746, a detailed description of the EPS performance 9746 will be omitted. Since the configuration shown in Fig. 7D in the first embodiment can be similarly used for the range class policy 9748, a detailed description of the range class policy 9748 will be omitted. Since the configuration shown in Fig. 7D in the first embodiment can be similarly used for the range class definition 9749, a detailed description of the range class definition 9749 will be omitted.

Fig. 17 shows an example of the expression code 9743. The expression code 9743 shown in Fig. 17 manages expression codes which are generated on the basis of an application type and a piece of information for UE identification from friend lists managed by the UE 10 or the application server 98. Fig. 17 shows, as expression codes, expression codes for APP1 (UE10a@APP1ex and UE10b@APP1ex) and expression codes for APP2 (UE10a@APP2ex and UE10b@APP2ex) in the UE 10, shows an expression code for APP1 (UE10@APP1ex) and expression codes for APP2 (UE10@APP2ex and UE10b@APP2ex) in the UE 10a, and shows an expression code for APP1 (UE10@APP1ex) and expression codes for APP2 (UE10@APP2ex and UE10b@APP2ex) in the UE 10b.

Note that the expression code 9743 is generated from an application ID indicating an application type and a UE ID for UE identification. The authentication server 97 may receive a cryptographic key or the like from the application server 98 and generate an expression code on the basis of the cryptographic key from the application server.

The expression code 9743 may be an identifier which is generated on the basis of pieces of information on an application type and a UE identifier. Note that the expression code 9743 may be a piece of management information which is generated on the basis of a UE identifier managed by the UE 10 or the application server 98.

The UE 10 can use the expression code 9743 to discover the UE 10a. In contrast, the UE 10a uses the expression code 9743 to be discovered by the UE 10.

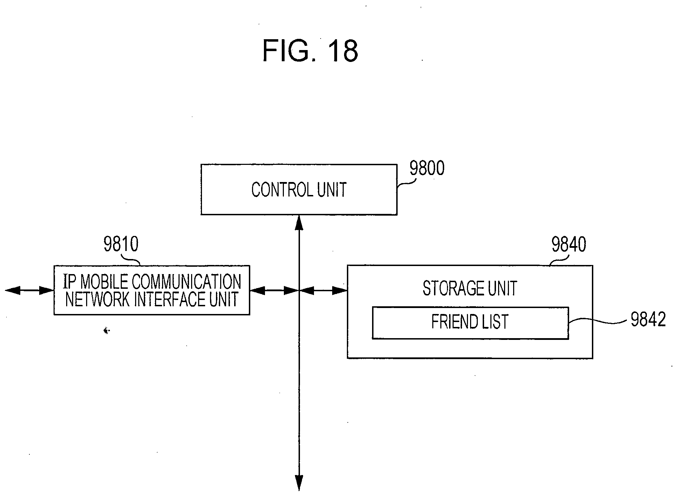

Fig. 18 shows the configuration of the application server 98. In the application server 98, an IP mobile communication network interface unit 9810 and a storage unit 9840 are connected to a control unit 9800 via a bus.

The control unit 9800 is a functional unit for controlling the application server 98. The control unit 9800 implements various processes by reading out and executing various programs stored in the storage unit 9840.

The IP mobile communication network interface unit 9810 is a functional unit for the authentication server 98 to connect to the IP mobile communication network 5.

The storage unit 9840 is a functional unit having recorded thereon programs, data, and the like necessary for various operations of the UE 10. The storage unit 9840 is composed of, for example, a semiconductor memory or a hard disk drive (HDD).

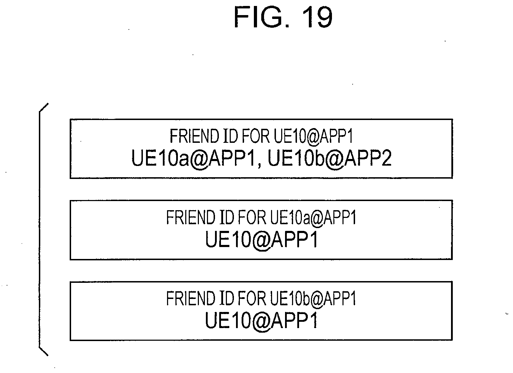

Additionally, the storage unit 9840 manages a friend list 9842. Fig. 19 shows an example of the friend list 9842. In Fig. 19, friend IDs for UE10@APP1 (UE10a@APP1 and UE10b@APP1), a friend ID for UE10a@APP1 (UE10@APP1), and a friend ID for UE10b@APP1 (UE10@APP1) are managed as a friend list for APP1.

Although the application server 98 is a server which provides a service in APP1 and manages a friend list for APP1, an application for a different application may be managed. If a friend list for a single application is not managed, and a server provides a service supporting a plurality of applications, a friend list for the plurality of applications may be managed.

Note that the application server 98 and the authentication server 97 may be configured as a signal apparatus. The application server 98 and the authentication server 97 may be configured to be included in the PDN 20 or may be configured to be included in a core network 7.

### [2.3 Description of Processing]

A specific procedure and a specific process in the above-described mobile communication system will now be described. A procedure when the UE 10 requests authentication of discovery, the authentication server 97 generates an expression code from a parameter necessary for an expression code from the application server 98 and authenticates a range class, and the UE 10 receives the expression code and the range class together with the authentication of discovery and starts discovery will be described with reference to Fig. 20. Note that the authentication server 97 is an authentication server managed by a mobile telecommunications carrier, discovery of which is used by the UE 10, and that the application server 98 is a server which provides a service of an application used by the UE 10.

The UE 10 has an application capable of using ProSe installed in advance. In Fig. 20, in the UE 10, a ProSe-capable application acting a role in a ProSe-capable application and the 3GPP layer functioning to communicate with a network of a mobile telecommunications carrier will be separately described.

The UE 10 first executes an attach procedure upon, for example, power-on of a communication terminal and connects to the core network 7 via an LTE access network 80. The attach procedure is executed by the UE 10, the MME 40, a PGE 30, an SGW 35, the eNB 45, and the like through exchanging control messages.

Authentication of connection of the UE 10 to the core network 7 is provided through the attach procedure, and a communication path is established. After that, the UE 10 may transit to idle mode, which is a state without communication or may transit to active mode, which is a state during communication.

Note that the UE 10 can connect to the eNB 45 and may receive a piece of temporal information or a piece of frequency information used for ProSe discovery or ProSe communication.

The UE 10 first acquires a friend list (S1702). The UE 10 may be configured by a user setting to hold a friend list in advance or may communicate with the application server 98 and acquire a friend list from the application server 98. The friend list to be acquired here is a piece of identifier information which is managed by the application layer. As an example of the piece of identifier information, a user ID or the like of an individual application, such as Skype or LINE, may be used.

An application of the UE 10 then makes a request for an expression code to the 3GPP layer of the UE 10 (S1704). The request may be an authentication request message for provision of a ProSe service by the UE 10, a service request message for provision of a ProSe service by the UE 10, or a registration request message for registration of the UE 10 in a ProSe service. A target ProSe services may be a service for neighboring terminal detection, a service which provides establishment of a direct communication path with a neighboring communication terminal, or a service including the both functions.

The request for an expression code may be transmitted with inclusion of an APP list, the friend list, and a UE ID. A UE ID may be an international mobile subscriber identity (IMSI), by which the UE 10 is identified, or a piece of user identification information used in the application. Since the UE 10 performs ProSe-based communication (or discovery) with the UE 10a in APP1, APP1 is placed on the APP list, and the UE 10a is placed on the friend list. In the case of ProSe-based communication in a plurality of applications, notification of the plurality of applications may be given. In the case of ProSe-based communication with a plurality of UEs, pieces of identification information of the plurality of UEs may be placed on the friend list.

Note that the APP list and the friend list may be pieces of identification information which are managed by the application.

The 3GPP layer of the UE 10 makes a request for an expression code to the authentication server (S1706). An APP list and a friend list are included in the request for an expression code. The APP list and the friend list are the APP list and the friend list, notification of which is given by the application of the UE 10 in S1704. The UE 10 may include a range class in the request for an expression code. An object to be included may be arbitrarily determined by the UE 10 and may, for example, be changed from range class to application type.

The authentication server 97 after reception of the request for an expression code extracts the APP list (APP1) and the friend list included in the request for an expression code. If a range class is included, the range class is also extracted. The authentication server 97 then searches for the application server 98 on the basis of the APP list. The authentication server 98 after finding of the application server 98 communicates with the application server 98 and acquires a parameter, from which an expression code is to be generated (S1708) As the parameter for expression code generation, for example, a cryptographic key for encrypting an expression code may be acquired. Alternatively, an algorithm for generating an expression code may be acquired.

The authentication server 97 then generates an expression code (S1710). The expression code generates the expression code using an APP list 142 and a friend list 144 received from the UE 10 and a piece of information acquired from the application server 98. Not only an expression code for a communication target UE included in the friend list but also an expression code for the UE 10 that is a transmitter of the request for an expression code is generated.

The authentication server 97 then performs range class authentication using the application list 9742, the RAN performance 9744, the EPS performance 9746, and the range class policy 9748 (S1712). In the range class authentication, a range class is determined. Since the method, by which a range class is authenticated by the local authentication server 90, described in the first embodiment can be similarly used as a range class determination method, a description thereof will be omitted. If the UE 10 has given notification with inclusion of the range class, whether to permit the range class of the UE 10 may be determined, and the range class may be authenticated. Assume here that the range class is determined as class 1.

The authentication server 97 then transmits an expression code response to the UE 10 (S1714). At this time, the authentication server 97 includes the expression codes generated in S1710 and the range class authenticated in S1712. The authentication server 97 may transmit a piece of time- or frequency-related information for transmitting a signal for detection of a neighboring terminal by the UE 10 or a signal for detection of the UE 10 by a neighboring terminal. For example, several candidates for a piece of temporal information or a piece of frequency information usable for ProSe discovery or ProSe-based communication may be assigned in advance, and notification of a piece of information indicating which one of the candidates to use may be given.

Note that the authentication server 97 gives notification of the expression codes not only to the UE 10 but also to the UE 10a as a communication (discovery) target for the UE 10 (S1722). At this time, the authentication server 97 may transmit a piece of time- or frequency-related information for transmitting a signal for detection of a neighboring terminal by the UE 10a or a signal for detection of the UE 10 by a neighboring terminal. For example, several candidates for a piece of temporal information or a piece of frequency information usable for ProSe discovery or ProSe-based communication may be assigned in advance, and notification of a piece of information indicating which one of the candidates to use may be given.

The authentication server 97 may transmit with inclusion of the range class as a piece of information designating a range of detection of a neighboring terminal or detection by a neighboring terminal to the UE 10 or the UE 10a or may further refer to the range class definition 949 and transmit with inclusion of a piece of definition information corresponding to the determined range class. As the piece of definition information, a piece of information designating transmission power of a signal to detect a neighboring terminal, such as a piece of information indicating a physical distance, a network configuration, or the value of radio field intensity from transmission power or the like, may be transmitted as described earlier.

The UE 10 receives the response to the request transmitted to the authentication server and receives the expression codes. The UE 10 also causes the application layer to sense the reception of the expression code (S1716) and manages an APP ID indicating an application type and each expression code mapped to each other (S1718). The UE 10 may extract the range class (class 1) included in the expression code and manage the range class in association with the APP ID.

The UE 10 then starts discovery using the piece of information on the range class (class 1) (S1724). At this time, the UE 10 determines a discovery area using the range class definition 148. Since the range class is class 1, the UE 10 decides to make a discovery within a distance of 500 m.

More specifically, the UE 10 may calculate transmission power of a signal for detection of a neighboring terminal or a signal for detection by a neighboring terminal necessary for discovery on the basis of the received range class and the range class definition 148.

Note that, as described earlier, a piece of definition information stored in the range class definition 148 may be dynamically updated via a network. For example, the UE 10 may receive a piece of definition information from the eNB 45 and update the range class definition 148.

The UE 10 may detect, on the basis of a piece of received information, whether a network supports a ProSe-related service and determine, on the basis of a result of the detection, whether to make a request for authentication to the local authentication server 90. The request for authentication may be a service request message for provision of a ProSe service by the UE 10 or a registration request message for registration of the UE 10 in a ProSe service. A target ProSe service may be a service for neighboring terminal detection, a service which provides establishment of a direct communication path with a neighboring communication terminal, or a service including the both functions.

As described above, a piece of information indicating whether a network, to which the UE 10 connects, supports a ProSe-related service, such as neighboring terminal detection or establishment of a communication path between neighboring terminals, may be received from the network, and it may be judged that the UE 10 transmits a request message if the network supports a ProSe-related service and does not transmit a request message if the network does not support a ProSe-related service.

With the above-described procedure, the UE 10 may request authentication of discovery, the local authentication server may authenticate a range class, and the UE 10 may receive the range class together with authentication of UE discovery and start discovery on the basis of a piece of information (for example, the range class) designating a range of detection of a neighboring terminal or detection by a neighboring terminal and a piece of information designating transmission power of a signal to detect a neighboring terminal, such as a piece of information indicating a physical distance, a network configuration, and the value of radio field intensity from transmission power or the like.

The UE 10 may receive a piece of information designating transmission power of a signal to detect a neighboring terminal, such as a piece of information indicating a physical distance, a network configuration, and the value of radio field intensity from transmission power or the like, through a response from the local authentication server 90. In this case, transmission power of a signal for detection of a neighboring terminal or a signal for detection by a neighboring terminal necessary for discovery may be determined on the basis of the received piece of information. As described above, a UE determines a piece of frequency information, a piece of temporal information, such as timing, and transmission power or the like which determines a range of detection for transmitting a signal for detection of a neighboring terminal or a signal for detection by a neighboring terminal necessary for discovery and executes Direct Discovery that involves detection of a neighboring terminal or detection by a neighboring terminal.

A signal for detection of a neighboring terminal or detection by a neighboring terminal may be transmitted with inclusion of the expression codes to give notification of the expression codes (S1724). Alternatively, a control message requesting establishment of a direct communication path from a neighboring communication terminal, such as the UE 10a, may be used.

A signal for detection of a neighboring terminal or a signal for detection by a neighboring terminal may be transmitted on the basis of a separate particular frequency or a separate piece of temporal information, such as transmission timing, such that whether the signal is intended for detection of a neighboring terminal or intended for detection by a neighboring terminal can be detected on the basis of the frequency or the piece of temporal information, such as transmission timing. A transmitted signal may be transmitted with inclusion of a piece of control information, and the piece of control information may be transmitted with inclusion of a piece of identification information indicating whether the signal is a signal intended for detection of a neighboring terminal or a signal intended for detection by a neighboring terminal.

With this configuration, when a communication terminal located in a neighborhood receives a signal from the UE 10, the communication terminal can detect, on the basis of frequency and a piece of temporal information, such as transmission timing, whether a signal for detection by a neighboring terminal is a signal intended for detection of a neighboring terminal.

Before notification of the expression codes by the UE 10, the UE 10a may acquire the expression codes from the authentication server in the same manner as the UE 10 and start discovery (S1722). The UE 10a senses a piece of information on the UE 10 as a communication source and starts discovery. Note that the UE 10a may be in a state waiting for discovery by the UE 10. The UE 10a may also sense notification including the expression codes from the UE 10 to the UE 10a.

The UE 10 may include the expression code of the UE 10 and the expression code of the UE 10a in discovery.

The UE 10a then receives the expression code of the UE 10 as the communication source from the UE 10 and the expression code of the UE 10a as a communication partner (S1726). The UE 10a after the receipt of the expression codes senses subjection to discovery by the UE 10 and gives notification of the discovery to the application (S1728).

Through the above-described procedure, the UE 10 requests an expression code, the authentication server authenticates a range class, and the UE 10 receives the range class together with an expression code response and can start discovery.

That is, the UE 10 can use the expression code 9743 in a network of the same mobile telecommunications carrier to perform discovery and neighborhood detection of the UE 10a. The UE 10a can use the expression code 9743 in a network of a different mobile telecommunications carrier to be subjected to discovery and neighborhood detection by the UE 10.

The UE 10 can use the expression code 9743 in a network of a different mobile telecommunications carrier to perform discovery and neighborhood detection of the UE 10a. The UE 10a can use the expression code 9743 in the network of the different mobile telecommunications carrier to be subjected to discovery and neighborhood detection by the UE 10.

The UE 10 may receive, through a response from the local authentication server 90, a piece of information designating transmission power of a signal to detect a neighboring terminal, such as a piece of information indicating a physical distance, a network configuration, and the value of radio field intensity from transmission power or the like. In this case, transmission power of a signal for detection of a neighboring terminal or a signal for detection by a neighboring terminal necessary for discovery may be determined on the basis of the received piece of information.

As described above, the UE 10 may execute a communication procedure for detection of a communication terminal which connects to an LTE access network and detection by the communication terminal by executing a step of executing an attach procedure and connecting to the LTE access network, a step of transmitting a request message requesting authentication of execution of neighboring communication terminal detection to an authentication server configured to be included in a core network connected to the LTE access network or a packet data network connected to the core network, a step of receiving a response message which is a response to the request message and contains a piece of information designating a range of detection of a neighboring terminal, a step of determining transmission power on the basis of the piece of information specifying the range of detection of a neighboring terminal, and a step of transmitting, with the transmission power, a signal to detect a neighboring terminal or a signal for detection by a neighboring terminal.

With the above-described procedure, the UE 10 can determine a piece of frequency information, a piece of temporal information, such as timing, and transmission power or the like which determines a range of detection for transmitting a signal for detection of a neighboring terminal or a signal for detection by a neighboring terminal necessary for discovery and execute Direct Discovery that involves detection of a neighboring terminal or detection by a neighboring terminal.

A mobile telecommunications carrier can determine a range of detection of a neighboring terminal by the UE 10 or a range of detection of the UE 10 by a neighboring terminal by controlling a piece of information, notification of which is to be given to the UE 10 by the local authentication server 90 or the eNB 45. More specifically, it is possible to control a range of arrival of a signal for notification of an expression code (S1724).

As described above, a signal to detect a neighboring terminal or a signal for detection by a neighboring terminal is transmitted with transmission power. A mobile telecommunications carrier can authenticate a piece of information on a range class necessary to discover a communication target UE when a UE performs data transmission/reception in ProSe.

A communication source UE can implement discovery of a communication target UE by making a range class authenticated by a mobile telecommunications carrier clear to a UE.

The embodiments of this invention have been described above in detail with reference to the drawings. The specific configuration of the invention is not limited to the embodiments.

A program running on each apparatus in the embodiments is a program which controls a CPU or the like so as to implement the functions of the above-described embodiments (a program which causes a computer to function). A piece of information to be handled by the apparatuses is temporarily accumulated in a temporary storage device (for example, a RAM) at the time of processing, is then stored in a storage device, such as one of various ROMs or HDDs, and is read out, corrected, or written by the CPU, as needed.

A recording medium storing a program may be any one of a semiconductor medium (for example, a ROM or a nonvolatile memory card), an optical recording medium or a magneto optical recording medium (for example, a digital versatile disc (DVD), a magneto optical disc (MO), a mini disc (MD), a compact disc (CD), or a BD), a magnetic recording medium (for example, a magnetic tape or a flexible disc), or the like. Implementation of the functions of the above-described embodiments is not limited to execution of a loaded program. The function of the present invention may be implemented by performing processing in cooperation with an operating system, another application program, or the like in accordance with instructions of the program.

In the case of distribution to the market, a program can be stored in a portable recording medium and be distributed or can be transferred to a server computer connected via a network, such as the Internet. In this case, a storage device of a server computer, of course, is also included in the present invention.

A part or the whole of each apparatus in the above-described embodiments may be implemented as a large scale integration (LSI) which is typically an integrated circuit. Functional blocks of each apparatus may be formed into separate chips, and some or all of the functional blocks may be integrated into a chip. A method for implementation as an integrated circuit is not limited to an LSI, and a dedicated circuit or a general-purpose processor may be used for implementation. If integrated circuit formation technology as a substitute for an LSI emerges owing to advancement of semiconductor technology, use of an integrated circuit according to the technology, of course, is possible.

LTE and a WLAN (for example, IEEE802.11a/b/n) has been illustrated as examples of a wireless access network in the above-described embodiments. Connections may be made through WiMAX instead of a WLAN.

### Industrial Applicability

One aspect of the present invention can be applied to, for example, a communication control method for controlling a search range if a communication terminal which performs data transmission/reception in a neighborhood service searches for a communication terminal as a communication target in order to start the neighborhood service.

### Reference Signs List

- 1: mobile communication system
- 5: IP mobile communication network
- 10: UE
- 20: PDN
- 30: PGW
- 35: SGW
- 40: MME
- 45: eNB
- 50: HSS
- 55: AAA
- 60: PCRF
- 65: ePDG
- 70: WLAN ANa
72 WLAN APa
74 GW
- 75: WLAN ANb
76 WLAN APb
- 80: LTE AN
- 90: local authentication server
- 95: home authentication server
- 97: authentication server
- 98: application server

## Claims

1. A User Equipment, UE (10), comprising:
a transmitting and receiving unit (110) configured for:
transmitting a request message including an application identity to a core network (7), and
receiving a response message responding to the request message, wherein the response message includes a range class corresponding to the application identity; and
a control unit (100) configured for initiating a procedure to perform a detection that another UE (10a, 10b, 10c) is in proximity of the UE (10),
wherein the range class is an information defining a discovery range, and
the detection is performed in accordance with the range class included in the response message.

2. A server apparatus (90) comprising:
a storage (940) configured for managing information on an application; and
a transmitting and receiving unit (910) configured for:
receiving a request message including an application identity from a User Equipment, UE (10); and
transmitting a response message responding to the request message, wherein the response message includes a range class corresponding to the application identity,
wherein the range class is an information defining a discovery range, and
the range class is used for detecting that another UE (10a, 10b, 10c) is in proximity of the UE (10).

3. A communication method for a User Equipment, UE (10), the communication method comprising:
transmitting a request message including an application identity to a core network (7);
receiving a response message responding to the request message, wherein the response message includes a range class corresponding to the application identity; and
initiating a procedure to perform a detection that another UE (10a, 10b, 10c) is in proximity of the UE (10),
wherein the range class is an information defining a discovery range, and
the detection is performed in accordance with the range class included in the response message.

4. A communication method for a server apparatus (90), the communication method comprising:
receiving a request message including an application identity from a User Equipment, UE (10); and
transmitting a response message responding to the request message, wherein the response message includes a range class corresponding to the application identity,
wherein the range class is an information defining a discovery range, and
the range class is used for detecting that another UE (10a, 10b, 10c) is in proximity of the UE (10).

## Patentansprüche

1. Ein *User Equipment* (UE) (10), das Folgendes umfasst:
eine Sende- und Empfangseinheit (110), konfiguriert zum:
Senden einer Anforderungsnachricht, die eine Anwendungsidentität enthält, an ein Kernnetzwerk (7), und
Empfangen einer Antwortnachricht, die auf die Anforderungsnachricht antwortet, wobei die Antwortnachricht eine Reichweite-Klasse (*range class*) enthält, die der Anwendungsidentität entspricht; und
eine Steuereinheit (100), die so konfiguriert ist, dass sie eine Prozedur einleitet, um eine Erfassung durchzuführen, dass sich ein anderes UE (10a, 10b, 10c) in der Nähe des UE (10) befindet,
wobei die Reichweite-Klasse eine Information ist, die einen Entdeckungsbereich definiert, und wobei die Erfassung in Übereinstimmung mit der in der Antwortnachricht enthaltenen Reichweite-Klasse durchgeführt wird.

2. Eine Server-Vorrichtung (90), die Folgendes umfasst:
einen Speicher (940), der zum Verwalten von Informationen über eine Anwendung konfiguriert ist; und
eine Sende- und Empfangseinheit (910), die konfiguriert ist zum:
Empfangen einer Anforderungsnachricht, die eine Anwendungsidentität enthält, von einem *User Equipment* (UE) (10); und
Übertragen einer Antwortnachricht, die auf die Anforderungsnachricht antwortet, wobei die Antwortnachricht eine Reichweite-Klasse enthält, die der Anwendungsidentität entspricht,
wobei die Reichweite-Klasse eine Information ist, die einen Entdeckungsbereich definiert, und wobei die Reichweite-Klasse zum Erfassen verwendet wird, dass sich ein anderes UE (10a, 10b, 10c) in der Nähe des UE (10) befindet.

3. Ein Kommunikationsverfahren für ein *User Equipment* (UE) (10), wobei das Kommunikationsverfahren Folgendes umfasst:
Senden einer Anforderungsnachricht, die eine Anwendungsidentität enthält, an ein Kernnetzwerk (7);
Empfangen einer Antwortnachricht, die auf die Anforderungsnachricht antwortet, wobei die Antwortnachricht eine Reichweite-Klasse *(range class)* enthält, die der Anwendungsidentität entspricht; und
Einleiten einer Prozedur, um eine Feststellung durchzuführen, dass sich ein anderes UE (10a, 10b, 10c) in der Nähe des UE (10) befindet,
wobei die Reichweite-Klasse eine Information ist, die einen Entdeckungsbereich definiert, und wobei die Erfassung in Übereinstimmung mit der in der Antwortnachricht enthaltenen Reichweite-Klasse durchgeführt wird.

4. Ein Kommunikationsverfahren für eine Server-Vorrichtung (90), wobei das Kommunikationsverfahren Folgendes umfasst:
Empfangen einer Anforderungsnachricht, die eine Anwendungsidentität enthält, von einem User Equipment (UE) (10); und
Senden einer Antwortnachricht, die auf die Anforderungsnachricht antwortet, wobei die Antwortnachricht eine Reichweite-Klasse enthält, die der Anwendungsidentität entspricht,
wobei die Reichweite-Klasse eine Information ist, die einen Entdeckungsbereich definiert, und wobei die Reichweite-Klasse zum Erfassen verwendet wird, dass sich ein anderes UE (10a, 10b, 10c) in der Nähe des UE (10) befindet.

## Revendications

1. Un *user equipment* (UE) (10), comprenant :
une unité d'émission et de réception (110) configurée pour :
transmettre un message de demande comprenant une identité d'application à un réseau central (*core network*) (7), et pour
recevoir un message de réponse répondant au message de demande, sachant que le message de réponse inclut une classe de portée correspondant à l'identité de demande ; et
une unité de commande (100) configurée pour lancer une procédure afin d'effectuer une détection qui détecte qu'un autre UE (10a, 10b, 10c) se trouve à proximité de l'UE (10),
sachant que la classe de portée est une information définissant une portée de découverte, et que la détection est effectuée conformément à la classe de portée incluse dans le message de réponse.

2. Un appareil serveur (90) comprenant :
une mémoire (940) configurée pour gérer des informations sur une application ; et
une unité de transmission et de réception (910) configurée pour :
recevoir un message de demande, incluant une identité d'application, de la part d'un *user equipment* (UE) (10) ; et
transmettre un message de réponse répondant au message de demande, sachant que le message de réponse inclut une classe de portée correspondant à l'identité d'application,
sachant que la classe de portée est une information définissant une portée de découverte, et que la classe de portée est utilisée pour détecter qu'un autre UE (10a, 10b, 10c) se trouve à proximité de l'UE (10).

3. Un procédé de communication pour un *user equipment* (UE) (10), le procédé de communication comprenant le fait de :
transmettre un message de demande incluant une identité d'application à un réseau central (*core network*) (7) ;
recevoir un message de réponse répondant au message de demande, sachant que le message de réponse inclut une classe de portée correspondant à l'identité d'application ; et de
lancer une procédure afin d'effectuer une détection qui détecte qu'un autre UE (10a, 10b, 10c) se trouve à proximité de l'UE (10),
sachant que la classe de portée est une information définissant une portée de découverte, et que la détection est effectuée conformément à la classe de portée incluse dans le message de réponse.

4. Un procédé de communication pour un appareil serveur (90), le procédé de communication comprenant le fait de :
recevoir un message de demande, incluant une identité d'application, de la part d'un *user equipment* (UE) (10) ; et
transmettre un message de réponse répondant au message de demande, sachant que le message de réponse inclut une classe de portée correspondant à l'identité d'application,
sachant que la classe de portée est une information définissant une portée de découverte, et que la classe de portée est utilisée pour détecter qu'un autre UE (10a, 10b, 10c) se trouve à proximité de l'UE (10).
